(19) Europäisches Patentamt
European Patent Office
Office européen des brevets

(11) Publication number: **0 271 964 B1**

(12) # EUROPEAN PATENT SPECIFICATION

(45) Date of publication of patent specification: **19.08.92**

(51) Int. Cl.$^5$: **A23J 3/00**, A23L 1/305

(21) Application number: **87202547.3**

(22) Date of filing: **16.12.87**

The file contains technical information submitted after the application was filed and not included in this specification

(54) **Method for preparing protein hydrolysates soluble in an acid environment, and the hydrolysates obtained.**

(30) Priority: **18.12.86 IT 2274886**
**18.12.86 IT 2274986**
**18.12.86 IT 2275086**

(43) Date of publication of application:
**22.06.88 Bulletin 88/25**

(45) Publication of the grant of the patent:
**19.08.92 Bulletin 92/34**

(84) Designated Contracting States:
**AT BE CH DE ES FR GB GR LI LU NL SE**

(56) References cited:
**FR-A- 2 181 507**
**FR-A- 2 186 193**
**FR-A- 2 338 001**
**US-A- 3 876 806**

**FSTA, no. 83-04-g0249, abstract no. 83018712; M. KABIRULLAH et al.: "Functional properties of sunflower protein following partial hydrolysis with proteases", & LEBENSMITTEL-WISSENSCHAFT UND -TECHNOLOGIE, 14(5), 232-236, 1981**

(73) Proprietor: **ENIRICERCHE S.p.A.**
**Corso Venezia 16**
**I-20121 Milan(IT)**

Proprietor: **ENICHEM SYNTHESIS S.p.A.**
**Via Ruggero Settimo 55**
**I-90139 Palermo(IT)**

(72) Inventor: **Boni, Renzo**
**Via di Montefiore Residence "Il Boschetto"**
**I-00060 Castelnuovo di Porto Rome(IT)**
Inventor: **Assogna, Amalia**
**Viale Parigi 37**
**I-00060 Riano Rome(IT)**
Inventor: **Grillo, Franco**
**Via Valle Melaina 61**
**I-00139 Rome(IT)**
Inventor: **Robertiello, Andrea**
**Via delle Egadi 36**
**I-00141 Rome(IT)**
Inventor: **Petrucci, Ferruccio**
**Via Americo Patrizi 25**
**I-05100 Terni(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

Inventor: **Giacomozzi, Ezio**
**Via delle Constituzione 19**
**I-00015 Monterotondo Rome(IT)**
Inventor: **Patricelli, Alberto**
**Via Vicolo del Convento 74**
**I-00015 Monterotondo Rome(IT)**

(74) Representative: **Roggero, Sergio et al**
**Ing. Barzanò & Zanardo Milano S.p.A. Via Borgonuovo 10**
**I-20121 Milano(IT)**

## Description

This invention relates to the field of protein hydrolysates, and in particular protein hydrolysates obtained by enzymatic action. Specifically, the invention relates firstly to a method for preparing protein hydrolysates soluble within the pH range of 2 to 9, which are of low organic acid and ash content and are characterised by organoleptic neutrality under the conventional conditions of use, comprising enzymatic hydrolysis implemented within the pH range of between about 6.0 and about 9.0 followed by acidification to the value for minimum solubility of the intact starting proteins, characterised in that said acidification is effected by ion exchange resins or by the simultaneous or sequential addition of three acids consisting of a mineral acid chosen from sulphuric acid and hydrochloric acid, phosphoric acid and an organic acid having a $pK_a$ of between about 3.0 and about 4.0, and which is of acceptable use in the food field in suitable proportions.

The invention relates secondly to the protein hydrolysates soluble at acid pH characterised by a low ash and organic acid content and organoleptic neutrality under conventional conditions of use which are obtained by this method, and the use of said protein hydrolysates in the food, dietetic and dieto-therapeutic field. The invention relates thirdly to a method for preparing a protein hydrolysate from sunflower by enzymatic hydrolysis under standard conditions using as starting material a sunflower cake ground into particles having a diameter of between 0.01 and 2.0 mm, and to the protein hydrolysate so obtained.

Numerous methods are known in the literature for the enzymatic hydrolysis of protein materials of vegetable or animal origin and the use of the resultant hydrolysates in the food field, as for example protein fortifiers for drinks or in dietetics and dieto-therapy.

Generally, these methods comprise a first step, particularly necessary when using a protein material of vegetable origin, in which the starting material is washed with aqueous acid solutions at minimum solubility pH for the protein material used in order to remove soluble non-protein components such as low molecular weight carbohydrates, phenols, mineral salts etc. This first step is then followed by the actual enzymatic hydrolysis. The literature amply describes enzymes suitable for this step together with the temperature and pH conditions and hydrolysis times necessary or preferred for each enzyme in order to obtain the required hydrolysate. Most commonly the hydrolysis pH lies between about 6.0 and about 9.0, in that most of the enzymes used industrially for the enzymatic hydrolysis of protein material work best at neutral or slightly basic pH (alkalase, neutrase, bioprase etc.) or at moderately acid (papain).

On termination of the hydrolysis reaction, the suspension is generally acidified by adding an organic or inorganic acid with the double purpose of deactivating the enzyme (possibly coupled with raising the temperature) and in particular of precipitating all the nitrogenated components which are insoluble at the pH attained, this being adjusted to within the range of minimum solubility of the intact starting proteins. This pH range is normally between 4.0 and 5.0.

The fraction containing the protein hydrolysate soluble within the chosen pH range then undergoes a series of conventional operations which finally lead to the required product, these including thermal flash, decoloration, concentration and drying.

The acidification step is commonly implemented by adding either an organic acid, of which the most frequently used is citric acid, or a mineral acid, of which the most frequently used is hydrochloric acid. In the first case the quantity of organic acid required to change the pH from the optimum value for hydrolysis to the value for minimum solubility of the intact proteins is very high both because of the low degree of dissociation of the organic acids suitable for use in the food field and because of the high characteristic buffer power of systems containing protein materials of different degrees of hydrolysis. In particular, if citric acid is used for acidification, the amount of this acid normally encountered in common enzymatic protein hydrolysates soluble in an acid environment is between 20 and 30% of the total dry substance. This high percentage of organic acid strongly limits the use of the protein hydrolysate obtained, in particular its use as an additive or integrator in food formulations in which organic acids are typical constituents of the formulation, and consequently are already present to a not inconsiderable extent (for example drinks, and fruit and vegetable juices).

The acid quantity is drastically reduced when mineral acid is used. However the protein hydrolysates obtained in this manner are characterised by the presence of unpleasant tastes and/or a composition rich in mineral compounds and consequently unsuitable for use in certain formulations.

The use of a single acid, whether organic or inorganic such as citric, malic, tartaric, lactic, phosphoric, hydrochloric or sulphuric acid, or the use of pairs of these acids in various proportions, has proved unable to obviate the aforesaid drawbacks. In particular, basic orange formulations (containing 10% w/w of sugar and 0.15% w/w of orange flavouring) were analysed for their contents and were tested by a group of "tasters" after adding 5% of a protein hydrolysate prepared from edible soya meal by in each case the same hydrolysis procedure but varying the acid and the pair of acids used in the acidification step. The

formulations containing more than 1% of a protein hydrolysate prepared using hydrochloric or sulphuric acid as the acidifying agent was organoleptically unacceptable because it was characterised by a taste indicated as "saline". Those formulations containing a protein hydrolysate acidified with organic acids such as citric, lactic, tartaric, or malic acid contain, for the said reasons, an acid quantity which is so high as to be unacceptable for certain formulations. Those protein hydrolysates prepared using only phosphoric acid are organoleptically acceptable but have a total ash content in general (> 20.0%) and of phosphates in particular (> 17%) which is incompatible with their use in foods. Tests were also carried out with binary mixtures using mixtures of citric acid and hydrochloric acid in various proportions. In the best cases, the protein hydrolysates obtained still had a high citric acid content of more than 16% and a chloride content of 4,4% which gave the formulation an unacceptable saline taste. Analogous problems arose with mixtures of citric acid and phosphoric acid, in which final products having a too high citric acid, phosphate and ash content were always obtained, even though the proportions of the two acids were varied.

An attempt to obtain predominantly amino acidic protein hydrolysates is disclosed by FR-A-2 131 507, in which the proposed procedure comprises the steps of subjecting the protein-containing substrate concerned to the action of a proteolytic enzyme, removing the fats by low temperature decantation, filtering the reaction medium, and causing the fitrate to flow through an ion-exchange resin bed, which can indifferently be anionic or cationic in character, eluting the resin, and concentrating the eluate to recover the expected amino acidic active principles.

In the process now summarized, the resin is used for purifying the product: in fact, the amino acidic fractions sought for become bound to the resin, wherefrom they shall be released either by the agency ammonium hydroxide if a cation-exchange resin is used, or by the agency of hydrochloric acid if an anion-exchange resin is used.

The polypeptide fraction, in this case, is not retained by the resin, and it is not of interest in the FR-A-2 131 507, which is directed to the recovery of amino acids, rather than polypeptides.

This invention, contrarywise, is directed to the preparation of proteinic hydrolysates in which the polypeptides definitely predominate, said hydrolysate being soluble at pH values of from 2 to 9, organoleptically neutral and having a low organic acid and phosphate content.

In order that this objective may be achieved, this invention provides a method for preparing a predominantly polypeptidic hydrolysate by enzymatic hydrolysis of a protein-containing substrate, at a pH of from 6,0 to 9,0 and subsequent acidification, characterized in that the acidification step is carried out by admixing the liquor obtained in the enzymatic hydrolysis step with an ion-exchange resin having a high proton-yielding capacity, or, alternatively, by either concurrently, or subsequently, adding three nutritionally acceptable acids selected from sulphuric acid, hydrochloric acid, phosphoric acid, and the organic acids having a $PK_a$ of from 3,0 to 4,0.

Hydrogen-ion-activated cation exchange resins based on styrene-divinyl benzene copolymers with different divinylbenzene contents are preferred.

More particularly, the commonly designated strong acidic cation-exchange resins, that is, the resins having a high proton yielding ability are suggested: they are used, inter alia, as acidifiers and cation sequestering agents, and operate according to the following reaction pattern:

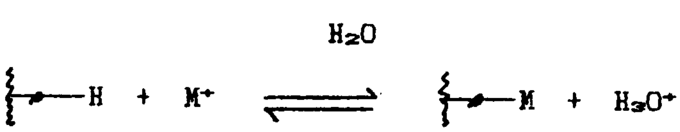


where

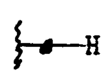

represents the hydrogen-activated cation resin and $M^+$ represents for example an alkaline cation.

Preferred resins are the strong sulphonic resins and in particular those prepared in the form of particles with an average diameter exceeding 0.4 mm.

Particularly suitable are gel resins such as the following currently available resins:

- Amberlite® (Rohn & Hass) IR-116, IR-118, IR-120, IR-122, IR-124
- Dowex® (Dow Chemical) 50-W, HCR, HGR
- Lewatit® (Bayer) S-100, S-109
- Duolite® (Duolite International) C-20, C-225, C-255, C-206A

- Relite® Ionac (Sybron Chemicals) CF, C-250, C-255, C-240, CFA
- Kastel® (Ausind) C-300, C-360, C-322.

Resins of macroporous or macro-crosslinked type can also be used such as:

- Amberlite® 200, 200-C, 252
- Dowex® MSC-1
- Lewatit® SP-112, SP-120
- Duolite® C-26m C-264m C-265
- Relite® Ionac CFS, CF2, C-360, CFP-110
- Kastel® C-301, C-383, C-382.

The quantity of resin to be used in the method of the present invention depends mainly on the type of resin, the nature of the protein substrate, the degree of hydrolysis and the enzyme used. This quantity varies normally from 0.3 to 1.5 g, expressed on a dry basis, per g of protein present in the hydrolysis medium.

An important aspect of the present invention is the possibility of recovering the resin downstream of the acidification operation, its generation in hydrogen ion form and its reuse in utilisation-regeneration cycles which can be repeated many times.

A further advantage of the method of the present invention over previously used systems is the fact that the use of the resin enables hydrolysates to be obtained which, not having to undergo the addition of reagents which remain in the final product to reduce its nitrogenated substance content, are characterised by a high protein material content. Although varying according to the raw material used, this protein content is always greater than 70% of the total dry substance.

A further improvement obtained by the method of the present invention over conventional methods for the preparation of enzymatic protein hydrolysates soluble in an acid environment is that products are prepared which, having undergone a process of separation of the cations present, are characterised by a low ash content in general and a low content of alkaline and alkaline-earth metal cations in particular. Although varying according to the raw material and the hydrolysis conditions, this ash content is always less than 4% of the total dry substance.

If alternatively the acidification step is implemented by adding three acids, organic acids which satisfy the aforegoing definition include citric acid, lactic acid, tartaric acid and malic acid. According to a preferred aspect of the present invention that of the said acids used is citric acid, which is the organic acid mostly used in the food sector in general and in the protein hydrolysate field in particular.

To allow introduction of 5% (w/w) of the protein hydrolysate into the formulations, it has been found that the hydrochloric acid or sulphuric acid content must be less than 1.7% and 2.1% respectively. The phosphate content must be less than 6.3%, while the organic acid content must not exceed 13% to enable the protein hydrolysate to be introduced to the extent of 5% (w/w) into an acid formulation without considerably affecting the overall organic acid content.

These proportions are respected, for example in the case of protein starting material of vegetable origin, by using the organic acid for reducing the pH from the optimum pH for hydrolysis (between 6.0 and 9.0) to about pH 5, the phosphoric acid for reducing the pH from about 5 to about 4.6 and the hydrochloric or sulphuric acid for reducing the pH from about 4.6 to the minimum pH for the solubility of the intact starting proteins which, in the case of protein material of vegetable origin, is generally about 4.3.

In the case of protein starting material of animal origin such as casein, which has an isoelectric point at a slightly higher pH of around 4.7, the proportions of the three acids are maintained by using the organic acid for reducing the pH from the optimum hydrolysis value to about 5.2, the phosphoric acid for reducing the pH from about 5.2 to about 4.9 and the hydrochloric or sulphuric acid for reducing the pH from about 4.9 to the minimum solubility pH.

Protein materials of vegetable origin which can be used as starting materials in the method of the present invention are obtainable for example from soya, maize, sunflower, cotton, flax, peanuts etc., and preferably from soya and sunflower.

Before washing them and subjecting them to enzymatic hydrolysis, the raw starting materials can be treated by the conventional methods known in this field (eg. oil removal, decortication, extraction of unrequired components, grinding etc.).

Protein materials of animal origin which can be used in the method of the invention include casein, collagen, gelatin, lactoalbumin etc.

As stated, the present invention also relates to a method for preparing a protein hydrolysate from sunflower by enzymatic hydrolysis under conventional conditions, characterised by using as starting material a sunflower cake ground such that the resultant particles have a mean diameter of between 0.01 and 2.0 mm.

Sunflower cake is one of the least commercially valuable byproducts of the oil seed processing industry.

Compared with other extraction cakes or meals (such as those obtainable from soya beans, peanuts, flax, maize etc.) sunflower cake is characterised by a high content of raw fibre, lignin and phenols accompanied by a relatively low percentage of proteins. Because of these characteristics, sunflower cake is currently used only for preparing low-cost animal feeds mainly for polygastrics. The following table shows the main chemical and dietetic characteristics of four sunflower cake samples obtained from different Italian oil producing companies.

TABLE

Main characteristics of different sunflower cake samples

(values expressed in % w/w)

| Parameter analysed | Sample 1 | Sample 2 | Sample 3 | Sample 4 |
|---|---|---|---|---|
| Moisture | 8.6 | 6.2 | 7.3 | 9.8 |
| Crude proteins | 28.4 | 30.5 | 30.6 | 27.1 |
| Crude lipids | 1.4 | 1.2 | 1.1 | 0.9 |
| Ash | 5.6 | 6.7 | 6.0 | 6.1 |
| Crude fibre | 28.9 | 29.3 | 29.0 | 28.4 |
| Non-nitrogenated extracts | 27.1 | 26.1 | 26.0 | 27.7 |
| Total phenols | 2.6 | 3.5 | 1.6 | 1.9 |
| Saccharides and oligosaccharides of low molecular weight | 6.3 | 6.2 | 3.4 | 8.2 |

Sunflower cake constitutes a potentially interesting raw material for the food industry in general and in particular as a source of proteins for two basic reasons:

- its wide low-cost availability on nearly all markets of industrialised countries
- the biological value of the protein which is characterised firstly by a relatively high sulphurised amino acid content (compared with other vegetable proteins). The selective solubilisation of the protein material contained in the sunflower cake by the use of specific proteolytic enzymes, which forms a subject matter of the present invention, attains two main objectives:
- separation of the nitrogenated component from the remainder of the material which, remaining in insoluble form, can be easily eliminated;
- formation of a nitrogenated fraction which, consisting of a mixture of oligopeptides of lower molecular weight than the "intact" protein, possesses biological-nutritional and chemico-functional characteristics typical of protein hydrolysates. Protein hydrolysates obtained by the use of biological catalysts such as enzymes, or by the use of chemical catalysts such as mineral acids, have been the subject of

many years of intense basic and applicational research.

Although many raw materials of different origin were examined for the production of protein hydrolysates, milk and fish proteins and, in the vegetable field, proteins of soya and its derivatives were subjected to particular study and use.

The scientific and patent literature carries few references to the production of protein hydrolysates from sunflower, probably because of the intrinsic limits of the raw material, as partly described in the present patent application.

Particular study has been given to the use of whole yeast cells as proteolytic agents for sunflower cake which after hydrolysis was to be used as a diet integrator in the feed of chickens for eating [A. Belatti and R. J. Ertola, 1965, Ind. Quim. 24 (I): 44-46]. Italian patent application No. 22604 A/82 describes a process which, using proteolytic enzymes on edible sunflower meal with a raw fibre content of ≦ 9% leads to the production of hydrolysates which are entirely dispensable in water and/or totally soluble hydrolysates.

According to the present invention, it has now been found possible, under suitable conditions, to use sunflower cake as raw material in the production of enzymatic protein hydrolysates which are perfectly soluble within a wide pH range.

The presence of material which is inert foodwise, such as raw fibre, as is typical of sunflower cake and which normally limits the use of the material, becomes useful in the process of the present invention, which as its first step includes special grinding of the raw material.

In this respect, the fibre particles, of suitable size, act as a valid aid in the separation of the residual solid material after hydrolysis.

Moreover, by producing particles which are smaller than the normal constituent sunflower cake particles but not so small as to clog the pores of filter screens or to precipitate on decantation, the useful surface for enzyme attack is increased and the hydrolysis stage facilitated, so increasing the reaction rate.

Consequently, in the method of the present invention the sunflower cake is firstly suitably ground so that the resultant particles have a mean diameter of between 2.0 and 0.01 mm. According to a preferred aspect of the present invention, the cake is ground to obtain particles having a mean diameter of between 1.0 and 0.01 mm, and more preferably between 0.5 and 0.01 mm.

This grinding is normally carried out by the conventional methods used for grinding vegetable fibres.

In particular, the desired results are easily obtained by using a hammer mill with a grid or sieve of suitable mesh dimensions to allow passage of particles having a diameter within the desired range. The rotor speed, the type and number of hammers and the raw material throughput are suitably adjusted to prevent too fine grinding.

After this first step, the undesirable soluble components of the sunflower cake are selectively extracted, these typically consisting of phenols (such as chlorogenic acid, sinapic acid, caffeic acid etc.), saccharides and oligosaccharides of low molecular weight (such as saccharose, raffinose etc.) and certain minerals.

In order to minimise loss of nitrogenated material, the soluble components are preferably extracted using dilute aqueous solutions of mineral acids (such as hydrochloric, sulphuric, phosphoric acid etc.) or organic acids (citric acid etc.), and adjusting the pH to within the range of minimum solubility of the proteins present in the sunflower cake, this being between 3.5 and 5.0. This extraction can however be performed by other methods known in the literature, such as by using mixtures of organic solvents (eg. ethanol/water) in suitable proportions.

It has however been found that the use of a dilute hydrochloric acid solution adjusted to pH 4.5, at ambient temperature and used in an overall liquid/solid weight ratio of between 30:1 and 15:1 gives excellent results in this extraction step.

The solid residue is then recovered, for example by continuous decantation or filtration, and is subjected to enzymatic hydrolysis.

For this purpose it is necessary to suspend the solid material in water in the correct proportions. The choice of the ratio of proteins present in the solid to water used is particularly important. In this respect, if on the one hand it is essential to ensure adequate substrate concentration for the enzyme, on the other hand the slurry obtained must be easy to render homogeneous in the hydrolysis reactor.

Using the pretreated panel according to the present invention, a suspension is prepared containing protein material in a concentration of between 3.0 and 7.0% by weight.

The enzyme used in this step can be chosen from a wide range of commercially available proteolytic microbe or vegetable enzymes such as papain, bioprase, alkalase, pepsin, neutrase etc.

It is however preferable to use papain or bioprase as these enzymes are able to generate polypeptides free of bitter taste and exercising high hydrolytic activity on the protein present in the sunflower panel. Particularly excellent results have been obtained using papain and in particular crude papain type I (Sigma Chemical Company).

The suspension pH and temperature must be changed from the values used for extraction to the optimum values for hydrolysis, which depend on the particular enzyme used.

In particular, with the exception of pepsin for which a strongly acid pH of generally between 2.0 and 3.5 is required, the optimum pH for hydrolysis is generally between 5.0 and 8.0, and if in accordance with a preferred aspect of the method of the invention papain or bioprase is used, this pH is preferably between 5.5 and 7.5.

According to conventional methods, this pH is obtained and kept constant by adding a strong alkali, particularly an alkaline and/or alkaline earth hydroxide. Sodium hydroxide is preferably used for this purpose because of its low cost and ready availability.

The optimum temperature range within which to effect the enzymatic hydrolysis also varies according to the particular enzyme used, but is generally from 35 to 75 ° C and preferably from 45 to 75 ° C. The enzyme is normally used in an enzyme/protein substrate weight ratio of 0.5-12%, and in particular if using papain 2.0-10.5%. If a thiolprotease such as papain is used, an activator has to be used simultaneously.

This is generally chosen from those substances able to reduce disulphide bridges, these including cysteine and its salts of addition, and alkaline and/or alkaline earth metabisulphites. This activator is used in a weight quantity of between 25 and 50% by weight of the enzyme used.

The hydrolysis is generally complete within a time of 90 and 360 minutes.

On termination of the hydrolysis reaction, the enzyme must be deactivated and the residual insoluble protein material precipitated by adjusting the pH of the medium to a value close to the isoelectric point of sunflower proteins.

This can be done by conventional methods, using dilute aqueous solutions of minerals acids (eg. hydrochloric acid, sulphuric acid, phosphoric acid etc.) or organic acids (eg. citric acid etc.) chosen on the basis of their compatibility with the use of the final product in the food field.

This described method of acidification normally uses citric acid, which has long been widely used and accepted by the market as an acidifying agent in food and pharmaceutical formulations.

Summarising, the acidification step is therefore preferably implemented either by adding three acids as heretofore described, or by treatment with an ion exchange resin.

After the acidification operation, by which the pH is adjusted to within the range of 3.5-5.0, the slurry must stand for a time of between 20 and 60 minutes for the enzyme to deactivate, after which it is cooled to close to ambient temperature. A first separation of the soluble material from the solid residue is then carried out.

The separation of the soluble fraction from the hydrolysis residue can be easily implemented for example by using a decanting centrifuge or a filter press.

For improved recovery of the hydrolysate, the separated solid residue can be further washed with water and again separated by the aforesaid methods.

It should be noted that the ease of implementation of these operations is related to the presence of raw fibre in the suitably prepared starting material, as it acts as an inert material aid in the separation.

According to the method of the invention, the still cloudy solutions obtained in this manner can be clarified after pooling by separating the insoluble complexes which form between the proteins and polysaccharides on raising the temperature.

For example, by heating the solution to a temperature of between 85 and 105 ° C for a time of between 1 and 10 minutes, eg. to 95 ° C for 2 minutes, the aforesaid complexes precipitate.

The suspension obtained is decoloured and further purified by treating with celite and activated carbon.

Specifically, celite is added to the said suspension when at a temperature of between 85 and 105 ° C; after cooling to a temperature of between 35 and 60 ° C the activated carbon is added and the suspension is kept stirred at this temperature for 15-40 minutes.

The two substances, which are preferably used in quantities of 0.3-1.5 g and 0.03-0.20 g per gram of protein material present in solution, are then removed by filtration using for example a filter press.

The clear solution obtained can be then fed to subsequent concentration at a temperature of between 65 and 105 ° C until the dry substance content is between 45 and 60% w.w, to be followed if required by drying in a spray dryer.

The following examples are given only to better illustrate the present invention.

EXAMPLE 1

A sample of "Protamine 200/20" edible soya meal (Cargill - USA), the chemical composition of which is given in Table 1, was washed with a 0.3 wt% aqueous HCl solution using a ratio of total solid to liquid of 1:15 (w/w).

Table 1

Main chemical characteristics of "Protamine 200/20" edible soya meal

| | (% by weight) |
|---|---|
| <u>Of the material as such</u> | |
| Moisture | 10.1 |
| <u>Of the dry material</u> | |
| Crude proteins | 55.1 |
| Crude lipids | 0.7 |
| Ash | 6.6 |
| Crude fibre | 2.1 |
| Non-nitrogenated extracts | 35.5 |

The separated solid was suspended in deionised water to obtain a slurry containing 8% (w/w) of crude proteins at a pH of about 8, obtained by adding a sodium hydroxide solution.

The hydrolysis, implemented using Alkalase 0.6L (Novo - Denmark) added in a quantity of 2.5-3.0% by weight of the crude proteins present in the slurry, was conducted at a temperature of about 50 °C under slight stirring for 2.5 hours. During hydrolysis the pH was kept constant by adding a dilute sodium hydroxide solution. Citric acid monohydrate (9.5 g/kg of suspension) (pH 5), 83% phosphoric acid (4 g/kg) of suspension) (pH 4.6) and an aqueous 37% hydrochloric acid solution (2.7 g/kg of suspension) (pH 4.3) were added to the suspension, which was kept stirring at 50 °C.

After about 30 minutes at 50 °C, the solid was separated from the liquid for example by a decanting centrifuge, and the liquid containing the soluble hydrolysate was further clarified in an Alfa-Laval centrifuge. This was then heated to 90 °C for some minutes, celite added while hot (7.4 g/kg of solution), the temperature reduced to 50 °C and activated carbon added (2.1 g/kg of solution). After 30 minutes at 50 °C, the solution was filtered through a filter press using polypropylene filter cloth and the perfectly clear liquid was concentrated and dried.

Table I shows a block diagram of the method of this example, the following pages giving data relative to the quantity and quality of the chemicals used, the chemical analysis of the streams deriving from the main unit operations, and the most important process parameters used (pH and temperature).

TABLE I

Block diagram and quantifying data of the process of Example 1

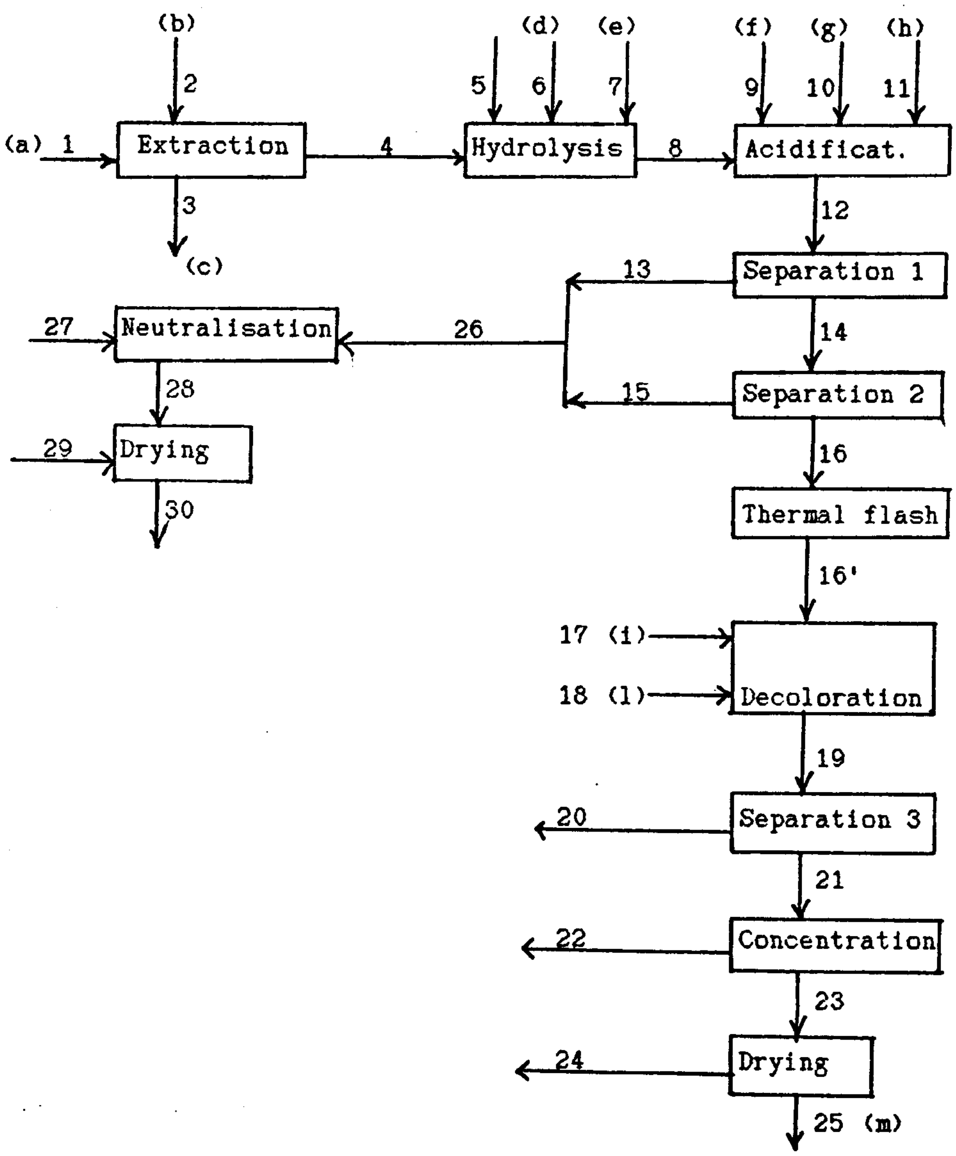


(to be continued)

NB: (a) Protamine 200/20; (b) HCl 0.3% w/w; (c) liquid effluent; (d) Alkalase 0.6L enzyme; (e) sodium hydroxide; (f) citric acid; (g) orthophosphoric acid; (h) hydrochloric acid; (i) celite; (l) activated carbon; (m) final product (protein hydrolysate).

TABLE I (continued)

STREAM COMPOSITIONS

| Stream | 1 | 2 | 3 | 4 | 5 | 6 | 7 | 8 | 9 | 10 |
|---|---|---|---|---|---|---|---|---|---|---|
| Dry substance | 22,7 | - | 6,7 | 16,0 | - | 0,35 | 0,8 | 17,15 | 1,4 | 0,5 |
| $H_2O$ | 2,3 | 375 | 327,3 | 50,0 | 76,5 | - | 4,2 | 130,7 | - | 0,1 |
| Total | 25,0 | 375 | 334,0 | 66,0 | 76,5 | 0,35 | 5,0 | 147,85 | 1,4 | 0,6 |

| Stream | 11 | 12 | 13 | 14 | 15 | 16 | 17 | 18 | 19 | 20 |
|---|---|---|---|---|---|---|---|---|---|---|
| Dry substance | 0,15 | 19,2 | 10,1 | 9,1 | 2,1 | 7,0 | 0,7 | 0,2 | 7,9 | 1,2 |
| $H_2O$ | 0,25 | 131,05 | 31,9 | 99,15 | 12,25 | 86,9 | - | - | 86,9 | 1,2 |
| Total | 0,4 | 150,25 | 42,0 | 108,25 | 14,35 | 93,9 | 0,7 | 0,2 | 94,8 | 2,4 |

| Stream | 21 | 22 | 23 | 24 | 25 | 26 | 27 | 28 | 29 | 30 |
|---|---|---|---|---|---|---|---|---|---|---|
| Dry substance | 6,7 | - | 6,7 | - | 6,7 | 12,2 | 0,3 | 12,5 | - | 12,5 |
| $H_2O$ | 85,7 | 79,0 | 6,7 | 6,4 | 0,3 | 44,15 | 0,3 | 44,45 | 43,8 | 0,65 |
| Total | 92,4 | 79,0 | 13,4 | 6,4 | 7,0 | 56,35 | 0,6 | 56,95 | 43,8 | 13,15 |

(to be continued)

TABLE I (continued)

ANALYSIS ON DRY BASIS

| Stream | 1 | 2 | 3 | 4 | 5 | 6 | 7 | 8 | 9 | 10 |
|---|---|---|---|---|---|---|---|---|---|---|
| Proteins | 12,5 | - | 1,0 | 11,5 | - | 0,35 | - | 11,85 | - | - |
| Ash | 1,5 | - | 1,1 | 0,4 | - | - | 0,6 | 1,0 | - | - |
| Citric ac. | - | - | - | - | - | - | - | - | 1,4 | - |
| Phosphates | - | - | - | - | - | - | - | - | - | 0,5 |
| Chlorides | - | - | - | - | - | - | - | - | - | - |
| Carbohydr.[1] | 8,7 | - | 4,6 | 4,1 | - | - | - | 4,1 | - | - |
| Others[2] | - | - | - | - | - | - | 0,2 | 0,2 | - | - |
| Total | 22,7 | - | 6,7 | 16,0 | - | 0,35 | 0,8 | 17,15 | 1,4 | 0,5 |
| **Stream** | **11** | **12** | **13** | **14** | **15** | **16** | **17** | **18** | **19** | **20** |
| Proteins | - | 11,85 | 5,5 | 6,35 | 1,55 | 4,8 | - | - | 4,8 | 0,1 |
| Ash | - | 1,0 | 0,4 | 0,6 | 0,1 | 0,5 | - | - | 0,5 | 0,1 |
| Citric ac. | - | 1,4 | 0,4 | 1,0 | 0,2 | 0,8 | - | - | 0,8 | - |
| Phosphates | - | 0,5 | 0,1 | 0,4 | - | 0,4 | - | - | 0,4 | - |
| Chlorides | 0,15 | 0,15 | - | 0,15 | 0,05 | 0,1 | - | - | 0,1 | - |
| Carbohydr. | - | 4,1 | 3,6 | 0,5 | 0,1 | 0,4 | - | - | 0,4 | 0,1 |
| Others | - | 0,2 | 0,1 | 0,1 | 0,1 | - | 0,7 | 0,2 | 0,9 | 0,9 |
| Total | 0,15 | 19,20 | 10,1 | 9,1 | 2,1 | 7,1 | 0,7 | 0,2 | 7,9 | 1,2 |
| **Stream** | **21** | **22** | **23** | **24** | **25** | **26** | **27** | **28** | **29** | **30** |
| Proteins | 4,7 | - | 4,7 | - | 4,7 | 7,05 | - | 7,05 | - | 7,05 |
| Ash | 0,4 | - | 0,4 | - | 0,4 | 0,5 | 0,2 | 0,7 | - | 0,7 |
| Citric ac. | 0,8 | - | 0,8 | - | 0,8 | 0,6 | - | 0,6 | - | 0,6 |
| Phosphates | 0,4 | - | 0,4 | - | 0,4 | 0,1 | - | 0,1 | - | 0,1 |
| Chlorides | 0,1 | - | 0,1 | - | 0,1 | 0,05 | - | 0,05 | - | 0,05 |
| Carbohydr. | 0,3 | - | 0,3 | - | 0,3 | 3,7 | - | 3,7 | - | 3,7 |
| Others | ,- | - | - | - | - | 0,2 | 0,1 | 0,3 | - | 0,3 |
| Total | 6,7 | - | 6,7 | - | 6,7 | 12,2 | 0,3 | 12,5 | - | 12,5 |

[1] comprises monosaccharides, oligosaccharides, cellulose, hemicellulose, lignin and lipids

[2] comprises all the chemicals used with the exception of citric acid, orthophosphoric acid, hydrochloric acid and water theoretically generated by the reaction: 2NaOH ---> $Na_2O + H_2O$ which takes place during the analytical determination of the ash.

(to be continued)

TABLE I (continued and concluded)

PROCESS CONDITIONS

| Stream | 1 | 2 | 3 | 4 | 5 | 6 | 7 | 8 | 9 | 10 |
|---|---|---|---|---|---|---|---|---|---|---|
| pH | ND | 1,6 | 4,5 | 4,5 | 8,6 | ND | 14,0 | 8,0 | ND | - |
| Temperature (°C) | ND | 20 | 20 | 20 | 20 | ND | 20 | 50 | ND | - |

| Stream | 11 | 12 | 13 | 14 | 15 | 16 | 17 | 18 | 19 | 20 |
|---|---|---|---|---|---|---|---|---|---|---|
| pH | - | 4,3 | ND | 4,3 | ND | 4,3 | ND | ND | 4,3 | ND |
| Temperature (°C) | - | 35 | ND | 20 | ND | 20 100 | ND | ND | 20 | ND |

| Stream | 21 | 22 | 23 | 24 | 25 | 26 | 27 | 28 | 29 | 30 |
|---|---|---|---|---|---|---|---|---|---|---|
| pH | 4,3 | ND | ND | ND | ND | ND | 14,0 | 6,5 | ND | ND |
| Temperature (°C) | 20 | >100 | 60 | >100 | ND | ND | 20 | 20 | >100 | ND |

The main process product, namely the dry protein hydrolysate (stream 25 of Table I) was characterised by analysing its main characteristics.

The results of these analyses are given in Table 2.

Table 2

Main characteristics of the product of Example 1 (stream 25)

| | |
|---|---|
| Analysis | |
| Of product as such: | |
| Moisture | 4.3% |
| On the dry basis: | |
| Proteins | 70.1% |
| Ash | 12.0% |
| Citric acid | 12.0% |
| Chlorides | 1.5% |
| Carbohydrates | 4.4% |
| Phosphates | 6.0% |
| Apparent density | 0.25 g/ml |
| Transmittance of a 5% (w/w) solution: | |
| $T_{540}$ | 83.4% |
| $T_{540}$ (after 2 min at 80°C) | 84.0% |
| $T_{540}$ (after 24 h at 4°C) | 84.2% |

EXAMPLE 2

Formulation and organoleptic tests were carried out both by adding 5% of hydrolysate from the previous example to an orange base prepared in he laboratory [containing 10% (w/w) of sugar and 0.5% (w/w) of orange flavouring], and by adding 2-3% and 5% of the hydrolysate to a commercial orangeade. In all cases the formulation was found to be stable with time and temperature. The results of the organoleptic tests carried out by a group of 10 tasters were all satisfactory as no significant saline taste was noted, and in addition in the case of the 5% formulation in commercial orangeade a slightly better acid taste than normal was noted by 2 tasters out of the 10.

EXAMPLE 3

The procedure of Example 1 was repeated, the three acids being added in the same quantities as in Example 1 but in mixture instead of individually. The protein hydrolysate obtained had the same characteristics as given in Table 2.

EXAMPLE 4

A sample of "Protamine 200/20" edible soya meal (Cargill - USA), the chemical composition of which is given in Table 3, was washed three times successively with an aqueous HCl solution of pH 4.5, using a total solid/liquid ratio of 1:15 (w/w).

Table 3

Main chemical characteristics of "Protamine 200/20" edible soya meal (values expressed in % by weight, excluding cations)

| | |
|---|---|
| <u>Of the material as such</u> | |
| Moisture | 10.1 |
| <u>Of the dry material</u> | |
| Crude proteins | 55.1 |
| Crude lipids | 0.7 |
| Ash | 6.6 |
| Crude fibre | 2.1 |
| Non-nitrogenated extracts | 35.5 |
| Total carbohydrates | 17.4 |
| Total phenols | 0.1 |
| Phosphorus | 0.9 |
| Potassium | 32080 ppm |
| Sodium | 5170 ppm |
| Magnesium | 920 ppm |
| Calcium | 690 ppm |
| Iron | 130 ppm |

The solid obtained was suspended in deionised water to obtain a slurry containing 8% by weight of crude proteins and adjusted to pH 8.0 by adding sodium hydroxide solution. The hydrolysis was effected with Alkalase 0.6L (Novo - Denmark) added to the extent of 3% by weight of the proteins present in the slurry, and was conducted at a temperature of 50 ± 1 ° C for a total time of 140 minutes under slight stirring.

During this period the pH was kept constant by adding dilute sodium hydroxide solution.

The slurry obtained by hydrolysis was divided into two quantitatively and qualitatively equal parts, known respectively as the first and second fraction.

The first fraction was treated by the traditional method described by J.L. Adler-Nissen in Process Biochemistry, July/August 1977, but with the exception of the wash stage of the residue, to obtain a soluble enzymatic protein hydrolysate containing citric acid which was used to acidify the hydrolysed slurry to pH 4.3. This hydrolysate obtained from the first fraction was prepared exclusively for comparison with the hydrolysate obtained from the second fraction. The second slurry fraction was firstly cooled to ambient temperature and then subjected to centrifugal separation at 2500 g. In this manner a slightly yellow cloudy liquid was obtained with a protein concentration of about 7.5% by weight.

The liquid obtained in this manner was transferred to a container fitted with a bladed agitator and the

system temperature was raised to 35 ± 2°C.

Under slight agitation, Amberlite® IR 120 Plus resin (Rohn & Hass - USA) was added in small portions to allow successive stages of equilibrium to be attained over a total average time of 25 minutes, the total resin added being 0.5 g, calculated on the dry basis, per g of protein present in the liquid.

The addition of the resin, the main characteristics of which are given in Table 4, resulted in a pH change of the medium from 8.0 (hydrolysis pH) to 4.3 (minimum soya protein solubility pH).

Table 4

Main characteristics of

Amberlite® IR 120 Plus resin (Rohm & Hass)

8% styrene-divinylbenzene copolymer in divinylbenzene

Functionality expressed as hydrogen ion-activated sulphonic groups

| | |
|---|---|
| Apparent density: | 0.85 g/ml |
| Average granule size | 0.5 mm |
| Average moisture content | 45% w/w |
| Active pH range | 0-14 |
| Active temperature range | 20-120°C |
| Total exchange capacity | 1.9 meq/ml moist) |

Experiments conducted in parallel have shown that once the quantity of resin required for attaining the required pH has been determined, the liquid can be added to the resin over a time of about 15 minutes in reaching the final equilibrium stage.

If the resin is added gradually to the liquid, protein material insoluble in an acid environment precipitates and becomes more visible as the pH decreases from 5.4 downwards.

It is interesting to note that because of the buffer action of the medium, resin consumption is not linear as the pH varies through the range 8-4.3. On an average, about 58% of the resin is consumed in reducing the pH from 8.0 to 5.4, and the remaining 42% is consumed in reducing the pH from 5.4 to 4.3.

The mixture obtained, consisting of a solution containing the soluble hydrolysate, the resin and the precipitated protein material, was filtered to recover the resin in salified form. The filtration was conducted using a high-density polyethylene filter cloth (Kartell - Italy) with a pore size of 0.2 mm, at ambient temperature.

The resin deposited on the cloth was washed with deionised water in a quantity of 10% of the filtered suspension.

The two filtrates obtained were pooled and separated by centrifuging. Operating at 4500 g a slightly cloudy solution was obtained with a nitrogenated material content of 5.4% by weight. In order to obtain a clear solution which was stable under all possible conditions of use, the liquid obtained by centrifuging was subjected to the following series of operations:

It was heated to 90°C for two minutes and then 0.8% by weight of Hyflo Supercel celite (J. Manville, USA) was added. The suspension obtained was firstly left to cool to 50°C under slight stirring, after which Actibon CA 1 activated carbon (Norit, USA) was added in a quantity of 0.02 g per g of solid material present in the suspension. After about 30 minutes at a temperature maintained at 50°C under slight stirring, the suspension was filtered through a type 1556 polyethylene cloth (Testori, Italy).

The clear solution was firstly concentrated and dried in a spray drier by the methods normally used in the food industry.

In this manner a fine ivory white powder was obtained and was subjected to a series of chemical and chemico-physical characterisation tests, which were also carried out in parallel on the analogous product obtained from the first fraction. The results of these tests are given for comparison purposes in Table 5.

Table 5

Main chemical characteristics of soya protein hydrolysates soluble at acid pH. (Results expressed as % by weight, excluding cations)

| | Hydrolysate from first fraction (Citric acid) | Hydrolysate from second fraction (Resin) |
|---|---|---|
| Of the material as such: | | |
| Moisture | 5.5 | 4.5 |
| Of the dry material: | | |
| Crude proteins | 64.6 | 91.5 |
| Citric acid | 23.1 | 0.0 |
| Total carbohydrates | 3.1 | 4.0 |
| Ash | 10.2 | 1.9 |
| Phosphorus | 0.6 | 0.6 |
| Potassium | 2080 ppm | 20 ppm |
| Sodium | 32930 ppm | 340 ppm |
| Magnesium | 700 ppm | 680 ppm |
| Calcium | 210 ppm | 20 ppm |
| Iron | 50 ppm | 40 ppm |

The protein yields calculated by the formula:

$$\frac{\text{Quantity of nitrogen recovered in the hydrolysate}}{\text{Quantity of nitrogen present in the crude material}} \times 100$$

were 42% and 38% for the first fraction (acidification by means of citric acid) and for the second fraction (acidification by means of resin) respectively.

The resin recovered by filtration as described heretofore was regenerated by the following procedure: the resin was fed into a perspex column suspended in deionised water at ambient temperature and was then treated with a 1.5 N sodium hydroxide solution until the eluate was strongly alkaline. In this manner the resin sulphonic groups were all activated in sodium form and the protein material retained on the resin, and which was insoluble at acid pH, was dissolved.

The resin in salified form was washed at ambient temperature with deionised water until the eluent was

completely neutral. The water used for this operation is normally 4 volumes per volume of wet resin.

When neutrality was reached, the resin in salified form was reactivated in hydrogen form using a 1 N HCl solution at ambient temperature until the eluate was strongly acid.

The activated resin in hydrogen form was washed with deionised water until the eluate was completely neutral. The water used in this operation was about 2.5 volumes per volume of wet resin.

The resin regenerated in this manner was ready for a new cycle for the preparation of enzymatic protein hydrolysates soluble at acid pH.

EXAMPLE 5

A sample of sunflower cake, the byproduct of an Italian oil mill, was finely ground by an Alpine mill model $C_{100}$LV until all the particles passed through a 0.8 mm diameter mesh sieve.

The material obtained in this manner was analysed from the chemico-dietetic aspect. The results of these analyses are given in Table 6.

Table 6

Main chemical characteristics of the sunflower cake used for the experiments described in Example 5.

(Results expressed in % by weight excluding cations)

| | |
|---|---|
| Of the material as such: | |
| Moisture | 9.8 |
| Of the dry material: | |
| Crude proteins | 30.1 |
| Crude lipids | 1.0 |
| Ash | 6.8 |
| Crude fibre | 31.9 |
| Non-nitrogenated extracts | 30.2 |
| Total carbohydrates | 9.1 |
| Total phenols | 2.1 |
| Phosphorus | 0.9 |
| Potassium | 29170 ppm |
| Sodium | 10900 ppm |
| Magnesium | 5280 ppm |
| Calcium | 2010 ppm |
| Iron | 300 ppm |

The ground sunflower cake obtained was washed by the method described in Example 4.

The resultant solid was suspended in deionised water to obtain a slurry containing 5.0% by weight of proteins at a pH of 6.5, adjusted to this value by adding sodium hydroxide solution.

The hydrolysis was effected using crude papain (Sigma, USA) added in a quantity of 3% by weight of the proteins present in the slurry and activated with $Na_2S_2O_5$ in a quantity of 33% by weight of the enzyme, and was carried out at a temperature of 50 ± 3°C for a total time of 90 minutes under slight stirring. During this period the pH was kept constant by adding sodium hydroxide.

The slurry obtained after hydrolysis was divided into two quantitatively and qualitatively equal parts, known respectively as the first and second fraction.

The first fraction was treated with citric acid until the pH of the slurry from the hydrolysis reached 4.2.

After about 30 minutes at 50°C the slurry was centrifuged at ambient temperature and the insoluble residue was washed with water and again separated. The two centrifuged liquid portions were pooled and the cloudy solution obtained was heated to 95°C for two minutes. The suspension obtained was then treated with activated carbon and celite at 50°C and filtered. The clear solution obtained was concentrated and dried in a spray drier. This hydrolysate, obtained from the first fraction, was prepared merely for comparison with that obtained from the second fraction. The second slurry fraction was firstly cooled to ambient temperature, and then centrifuged at 2500 g. In this manner a solid phase and liquid phase were obtained. The solid was resuspended in deionised water added in the weight ratio of 1:1 with respect to the moist material. After again centrifuging, the two supernatants were pooled to obtain a slightly cloudy light brown liquid with a protein concentration of about 2% by weight. The liquid obtained in this manner was transferred to a container fitted with a bladed stirrer and the system temperature was raised to 35 ± 2°C.

Under slight stirring, a total of 0.45 g of Amberlite IR 120 Plus resin (Rohm & Hass), calculated on a dry basis, per g of protein present in the liquid were added in small fractions to enable various stages of equilibrium to be attained, over a total average time of about 15 minutes.

The addition of the resin reduced the pH of the medium from 6.5 (hydrolysis pH) to 4.2 (sunflower protein minimum solubility pH). The mixture obtained was treated by the methods described in Example 4.

In this manner a fine beige-white powder was obtained which was subjected to a series of chemical characterisation tests which were also carried out in parallel on the product obtained from the first fraction. The results of these tests are given in Table 7. The protein yields obtained from the first fraction (acidification with citric acid) and from the second fraction (use of resin) were 39% and 34% respectively, when calculated by the method described in Example 4. The resin recovered by filtration was regenerated using the methods described in Example 4.

Table 7

Main chemical characteristics of sunflower protein hydrolysates soluble at acid pH. (Results expressed as % by weight, excluding cations)

| | Hydrolysate from first fraction (Citric acid) | Hydrolysate from second fraction (Resin) |
|---|---|---|
| Of the material as such: | | |
| Moisture | 2.9 | 2.0 |
| Of the dry material: | | |
| Crude proteins | 63.2 | 87.7 |
| Citric acid | 21.2 | 0.0 |
| Total carbohydrates | 4.7 | 6.2 |
| Ash | 9.5 | 3.3 |
| Phosphorus | 0.9 | 0.8 |
| Potassium | 10770 ppm | 1020 ppm |
| Sodium | 37780 ppm | 8080 ppm |
| Magnesium | 4290 ppm | 2120 ppm |
| Calcium | 1670 ppm | 750 ppm |
| Iron | 240 ppm | 220 ppm |

EXAMPLE 6

A sample of "Protamine 200/20" edible soya meal (Cargill, USA) was washed and enzymatically hydrolysed by exactly the same method as described in Example 4.

The slurry obtained by hydrolysis was divided into two quantitatively and qualitatively equal parts, known respectively as the first and second fraction.

The first fraction was treated by the traditional method described by J.L. Adler-Nissen in Process Biochemistry, July/August 1977, but with the exception of the hydrolysis residue wash stage, to obtain a soluble enzymatic protein hydrolysate containing citric acid which was used to acidify the hydrolysed slurry to pH 4.3. This hydrolysate obtained from the first fraction was prepared exclusively for comparison with the hydrolysate obtained from the second fraction. The second slurry fraction was firstly cooled to ambient temperature and then subjected to centrifugal separation at 2500 g. In this manner a slightly yellow cloudy liquid was obtained with a protein concentration of about 7.5% by weight. The liquid obtained in this manner was transferred to a container fitted with a bladed agitator and the system temperature was raised to 50 ± 2°C.

Under slight agitation, Amberlite® 200 resin (Rohm & Hass - USA) was added in small portions to allow

successive stages of equilibrium to be attained over a total average time of 20 minutes, the total resin added being 0.52 g, calculated on the dry basis, per g of protein present in the liquid. Before use, the resin was activated in hydrogen form by a dilute HCl solution as described in the regeneration stage of Example 1.

The addition of the resin, the main characteristics of which are given in Table 8, resulted in a reduction in the pH of the medium from 8.0 (hydrolysis pH) to 4.3 (minimum soya protein solubility pH).

Table 8

Main characteristics of

Amberlite™ 200 resin (Rohm & Hass)

| | |
|---|---|
| 20% styrene-divinylbenzene copolymer in divinylbenzene | |
| Functionality expressed as sodium-ion-activated | sulphonic groups |
| Apparent density: | 0.80 g/ml |
| Average granule size | 0.49 mm |
| Average moisture content | 48.0% w/w |
| Active pH range | 0-14 |
| Active temperature range | 20-300°C |
| Total exchange capacity | 1.7 meq/ml moist |

The addition of the resin, with consequent pH reduction, led to the formation of a precipitate as described in Example 4. The resin in salified form was firstly separated by filtration and then washed in exactly the same manner as that described in Example 4.

The two filtrates obtained were pooled and separated by centrifuging. Operating at 4500 g, a slightly cloudy solution was obtained having a nitrogenated material content of 3.6% by weight. The solution was subjected to all the purification, concentration and drying operations described in Example 1. In this manner a fine ivory white powder was obtained and was subjected to a series of chemical and chemico-physical characterisation tests, which were also carried out in parallel on the analogous product obtained from the first fraction. The results of these tests are given for comparison purposes in Table 9.

Table 9

Main chemical characteristics of soya protein hydrolysates soluble at acid pH. (Results expressed as % by weight, excluding cations)

| | Hydrolysate from first fraction (Citric acid) | Hydrolysate from second fraction (Resin) |
|---|---|---|
| Of the material as such: | | |
| Moisture | 5.5 | 3.0 |
| Of the dry material: | | |
| Crude proteins | 64.3 | 85.5 |
| Citric acid | 23.4 | 0.0 |
| Total carbohydrates | 3.0 | 4.7 |
| Ash | 10.7 | 3.6 |
| Phosphorus | 0.8 | 1.0 |
| Potassium | 2180 ppm | 440 ppm |
| Sodium | 33080 ppm | 20560 ppm |
| Magnesium | 720 ppm | 240 ppm |
| Calcium | 250 ppm | 180 ppm |
| Iron | 60 ppm | 40 ppm |

The protein yields calculated by the method described in Example 4 were 45% and 30% for the first fraction (acidification by means of citric acid) and for the second fraction (acidification by means of resin) respectively.

The resin was regenerated as described in Example 4.

EXAMPLE 7

A sample of enzymatic soya protein hydrolysate obtained using an ion exchange resin as described in Example 4 was used to prepare a protein-fortified fruit juice. The addition of the hydrolysate produced no substantial organoleptic change in the fruit juice used.

Two solutions were prepared for organoleptic analysis, this being conducted by a group of 20 tasters aged between 25 and 50.

The solutions were prepared in the following manner:

Solution A (Control)

Ripe peaches were peeled and their stone removed. The resultant material was completely homogenised until a fine puree was obtained, to which 7% (w/w) of saccharose, 3% (w/w) of water and 0.1%

(w/w) of ascorbic acid as antioxidant were added.

Solution B

3% (w/w) of soya hydrolysate was added to a portion of solution A. Using solutions A and B obtained as described, organoleptic tests were carried out for checking any bitter taste, acid taste (beyond that normal for peach juice), and "strange" taste.

The results of these tests are given in Table 10.

The chemico-dietetic characteristics of the products used for the tests are given in Table 11.

**Table 10**

**Results of organoleptic tests**

**Bitter taste**

| Solution | No. of persons noting strong bitter taste | No. of persons noting bitter taste | No. of persons not noting bitter taste |
|---|---|---|---|
| A | 0 | 0 | 20 |

| | | | |
|---|---|---|---|
| B | 0 | 0 | 20 |

Acid taste (beyond normal)

| Solution | No. of persons noting strong acid taste | No. of persons noting acid taste | No. of persons not noting acid taste |
|---|---|---|---|
| A | 0 | 3 | 17 |
| B | 0 | 2 | 18 |

"Strange" taste

| Solution | No. of persons noting strong strange taste | No. of persons noting strange taste | No. of persons not noting strange taste |
|---|---|---|---|
| A | 0 | 2 | 18 |
| B | 0 | 5 | 15 |

Table 11

Main chemico-dietetic characteristics of the products used for the organoleptic tests (values expressed in % /ww)

| | Sample A | Sample B |
|---|---|---|
| Of the product as such | | |
| Water | 85.3 | 82.3 |
| Of the dry substance | | |
| Crude proteins | 3.07 | 17.30 |
| Saccharose | 53.9 | 44.8 |
| Fructose | 16.4 | 13.8 |
| Glucose | 13.8 | 11.6 |
| Ash | 2.12 | 2.06 |
| Pectins | 1.10 | 0.90 |
| Crude fibre | 1.02 | 0.85 |

EXAMPLE 8

Samples of enzymatic protein hydrolysate prepared from soya meal and sunflower cake as described in Examples 4 and 5 respectively were suitably mixed together to obtain a product which by virtue of its

characteristics can be advantageously used as a protein component of a series of dietetic and dietotherapeutic formulations.

As indicated in Table 12, mixing 70 parts of the soya meal hydrolysate obtained as described in Example 4 with 30 parts of the sunflower cake hydrolysate obtained as described in Example 5 produces a product characterised by an amino acid profile very close to the ideal FAO (1975) protein.

Table 12

Essential amino acid content of the mixture of 70 parts of soya meal hydrolysate with 30 parts of sunflower cake hydrolysate (expressed as mg amino acid/g protein)

| Aminoacids | Soya meal hydrolysate (SO HYDROL) | Sunflower cake hydrolysate (SF HYDROL) | Standard FAO (Rome 1975) | Mixture of SO HYDROL (70%) SF HYDROL (30%) |
|---|---|---|---|---|
| Isoleucine | 41.9 | 40.8 | 40 | 41.6 |
| Leucine | 72.5 | 63.5 | 70 | 69.8 |
| Lysine | 64.7 | 31.9 | 55 | 54.9 |
| Methionine + Cystine (half) | 22.7 | 36.6 | 35 | 26.9 |
| Tryptophan | 14.6 | 12.7 | 10 | 14.0 |
| Phenylalanine + Tyrosine | 94.5 | 69.7 | 60 | 87.1 |
| Valine | 41.8 | 47.5 | 50 | 43.5 |
| Threonine | 42.9 | 43.7 | 40 | 43.1 |
| TOTAL | 395.6 | 346.4 | 360 | 380.9 |

The chemical composition of the aforesaid mixture, given in Table 13, is characterised by high protein content and low ash and in particular low sodium and potassium cation content.

Table 13

Chemical composition of the mixture of 70 parts soya meal hydrolysate and 30 parts sunflower cake hydrolysate (expressed as % w/w excluding cations)

| | |
|---|---|
| Material as such: | |
| Moisture | 3.7 |
| On dry basis: | |
| Crude proteins | 89.2 |
| Ash | 2.3 |
| Total carbohydrates | 4.5 |
| Phosphorus | 0.72 |
| Potassium | 320 ppm |
| Sodium | 2660 ppm |
| Magnesium | 1110 ppm |
| Calcium | 240 ppm |
| Iron | 100 ppm |

The molecular weight distribution and mean molecular weight of the two-hydrolysate mixture of the present example were determined by gel filtration as indicated in Table 14.

**Table 14**

**Molecular weight (MW) characteristics of mixture of 70 parts soya meal hydrolysate with 30 parts sunflower cake hydrolysate**

Percentages of various MWs — Mean MW (*) = 1100

| >10000 | 10000-5000 | 5000-2500 | 2500-1000 | <1000 |
|---|---|---|---|---|
| 2.7 | 3.3 | 7.6 | 24.4 | 62.0 |

(*) In calculating the mean MW, the fraction of MW >10000 was not taken into account

EXAMPLE 9

The use for dietotherapeutic purposes of the product obtained as described in Example 8 is illustrated below.

In the described application, this product forms the protein component of a formulation for infants and children unable to tolerate milk proteins. Compared with currently available vegetable milks based on intact proteins, the hydrolysate of Example 8 is particularly suitable, because of its molecular weight and protein characteristics (see Table 14) for subjects with accentuated allergy towards all heterologous intact proteins, and for which vegetable milks with integral proteins are unsatisfactory.

21.0 g of product consisting of a mixture of 70 parts of protein hydrolysate from soya meal and 30 parts of protein hydrolysate from sunflower cake, the characteristics of which are given in Example 8, were dissolved in 926 ml of water to obtain a clear solution.

The solution pH was raised from 4.2 to 6.5 by adding 0.36 g of NaOH and 0.50 g of KOH. 45.0 mg of taurine were added to the solution, which was kept constantly stirred.

The following were then added: 0.87 g of calcium phosphate, 0.41 g of calcium chloride, 0.83 g of calcium citrate, 0.26 g of sodium chloride, 0.77 g of potassium citrate, 0.18 g of potassium chloride, 0.12 g of magnesium chloride, 0.03 g of iron sulphate, 0.01 g of zinc sulphate, 0.87 mg of copper sulphate monohydrate, 0.20 mg of potassium iodide, 0.71 mg of manganese chloride tetrahydrate and 0.09 g of choline chloride.

These salts when added in the indicated quantities provide the product with its essential mineral content as required for the nutritional requirements of infant formulas. The quantities added naturally take account of the initial mineral contribution provided by the soya and sunflower hydrolysates (see Table 13). The following water-soluble vitamins were then added: 55 mg of ascorbic acid, 0.4 mg of thiamine hydrochloride, 0.6 mg of riboflavin, 9 mg of nicotinamide, 0.4 mg of pyridoxine hydrochloride, 0.1 mg of folic acid, 5.4 mg of calcium pantothenate and 0.003 mg of biotin. 45.0 g of saccharose were then added to the solution followed by 34 ml of 70% (w/w) corn syrup corresponding to 26.0 g of carbohydrates. In a separate step, 0.68 mg of vitamin A acetate, 0.01 mg of cholecalciferol, 17 mg of alpha-tocopherol acetate and 0.1 mg of vitamin $K_1$ were added to 36.9 g of a mixture of fats consisting of 20 g of sunflower oil and 16.9 g of coconut oil. This mixture of sunflower and coconut oil enriched with liposoluble vitamins was added dropwise to the solution by burette, under continuous stirring.

In this manner one litre of vegetable milk was obtained having a protein content of 18.0 g/litre and a pleasant taste, suitable for infants and children allergic to milk proteins.

The formulation obtained was finally dried in a Buchi 190 mini spray drier at an inlet and outlet temperature of 155 and 105 °C respectively, both to form a sample suitable for analysis and to obtain an atomised product easily dispersed in water on use, as in the case of commercial products.

The percentage composition of the dry powdered product is given in Table 15.

Table 15

Percentage composition of the non-allergic vegetable milk based on soya and sunflower proteic hydrolysates (per 100 g of dry substance)

| | |
|---|---|
| Proteins | 13.7 g |
| Taurine | 34.2 mg |
| Fats | 28.0 g |
| Linoleic acid | 7.6 g |
| Carbohydrates | 52.4 g |
| Minerals (ash) | 3.4 g |
| Choline | 53 mg |
| Potassium | 0.55 g |
| Calcium | 0.53 g |
| Chlorides | 0.47 g |
| Phosphorus | 0.38 g |
| Sodium | 0.28 g |
| Magnesium | 38 mg |
| Iron | 9.2 mg |
| Zinc | 3.8 mg |
| Copper | 0.38 mg |
| Iodine | 0.08 mg |
| Manganese | 0.15 mg |
| Moisture | 2.5 g |

EXAMPLE 10

A sample of sunflower cake was subjected to the joint action of a hammer mill and a vibrating sieve to obtain material which all passed through meshes of 0.9 mm diameter and of which 95% of the particles had a diameter of between 0.4 and 0.01 mm.

The combined action of the mill and sieve gave a material having the particle size analysis of Table 16.

Table 16

Particle size distribution of ground and sieved sunflower cake.

| Average particle size (mm) | % of fraction by weight, with respect to total |
|---|---|
| 0.90-0.80 | 0.2 |
| 0.80-0.63 | 0.3 |
| 0.63-0.40 | 0.7 |
| 0.40-0.20 | 16.8 |
| 0.20-0.10 | 20.7 |
| 0.10-0.03 | 61.3 |

The material obtained as described was used as feed to a plant for producing enzymatic protein hydrolysates operating in accordance with the block diagram of Table II. This table also shows data relative to the quantity and quality of the chemicals used, the chemico-dietetic analysis of the streams deriving from the main unit operations, and the more important process parameters used.

The main process product, consisting of the dry protein hydrolysate (stream 30 of Table II), was analysed for its main chemico-dietetic characteristics, its amino acid profile after total hydrolysis of the nitrogenated material, and molecular weight distribution of the polypeptides present. The results of these analyses are given in Tables 17, 18 and 19 respectively.

Table 17

Main chemico-dietetic characteristics of the enzymatic hydrolysate obtained from sunflower cake.

| | |
|---|---|
| Moisture | 5.3% |
| Crude proteins | 61.4% |
| Crude lipids | 0.6% |
| Ash | 9.2% |
| Crude fibre | 0.0% |
| Carbohydrates | 1.9% |
| Citric acid | 18.6% |
| Chlorides | 0.6% |
| Non-nitrogenated extracts | 2.3% |
| Phosphates | 2.0% |
| Sodium | 1.7% |
| Potassium | 2900 ppm |
| Calcium | 800 ppm |
| Magnesium | 3500 ppm |
| Iron | 400 ppm |

Table 18

Amino acid content determined after total hydrolysis of final products (g/100 g of protein material)

| | |
|---|---|
| Lysine | 3.19 |
| Histidine | 2.04 |
| Arginine | 8.38 |
| Aspartic acid | 10.55 |

| | |
|---|---|
| Threonine | 4.37 |
| Serine | 5.1 |
| Glutamic acid | 25.36 |
| Proline | 3.01 |
| Glycine | 6.16 |
| Alanine | 4.76 |
| Cystine (half) | 1.91 |
| Valine | 4.75 |
| Methionine | 1.75 |
| Isoleucine | 4.08 |
| Leucine | 6.35 |
| Tyrosine | 2.66 |
| Phenylalanine | 4.31 |
| Tryptophan | 1.27 |

Table 19

Molecular weight distribution of polypeptides present in the final product

| Molecular weight | % of fraction by weight with respect to the total |
|---|---|
| >12500 | 2.4 |
| 12500-5000 | 5.2 |
| 5000-2500 | 8.1 |
| 2500-1500 | 14.5 |
| 1500-1000 | 11.3 |
| <1000 | 58.5 |

Mean molecular weight = 1900 approx.

EXAMPLE 11

The procedure described in Example 10 was repeated but varying the hydrolysis and biocatalyst conditions. In this respect, the hydrolysis was conducted using Bioprase SP10 (Nagase) in a proportion of

1.44 g of enzyme per 100 g of protein present in the slurry, and with no activator. The hydrolysis time was 90 minutes at a temperature of 65 °C and the pH was kept equal to 7.0.

The quantity and characteristics of the proteic hydrolysates obtained were analogous to those described in Example 10.

EXAMPLE 12

An aqueous concentrated 40.2% (w/w) solution of the sunflower cake hydrolysate obtained as described in Example 10 and identified as stream 28 in Table II (process block scheme and data for the production of sunflower cake protein hydrolysates) was used to prepare a liquid formulation.

Because of its high content of predigested and easily assimilated proteins, this formulation represents a valid proteic supplement for elderly people, for athletes, and for individuals with digestive problems or those who require special diets.

The formulation was prepared in the following manner.

1 gram of powdered cherry flavour type 101.871 of the company Du-Crocq Italiana S.R.L., 1 gram of saccharin and 0.5 grams of potassium sorbate were added under stirring to 1000 grams of the aqueous concentrated solution, the composition of which is indicated in Table II of Example 10.

In this manner a clear syrupy solution of pH 4.3, dark brown colour and pleasant cherry taste was obtained.

The formulation obtained contains 26% (w/w) of predigested sunflower proteins having the amino acid composition and molecular weight distribution indicated in Tables 18 and 19 respectively. Four tablespoonfuls (about 60 ml) of the formulation of the present example administered daily represents a valid dietetic supplement, providing the body with 15 g of easily assimilated proteins (corresponding to 60 calories) and the amino acid quantity given in Table 20.

Table 20

Amino acids (mg) provided by four tablespoonfuls of the formulation based on enzymatic sunflower cake hydrolysate

| | |
|---|---|
| Essential amino acids | |
| Isoleucine | 612 |
| Leucine | 952 |
| Lysine | 478 |
| Methionine | 262 |
| Cystine (half) | 286 |
| Tryptophan | 190 |
| Phenylalanine | 646 |
| Tyrosine | 399 |
| Valine | 712 |
| Threonine | 655 |
| Non-essential | |
| Arginine | 1257 |
| Histidine | 306 |
| Alanine | 714 |
| Aspartic acid | 1582 |
| Glutamic acid | 3804 |
| Glycine | 924 |
| Proline | 451 |
| Serine | 765 |

EXAMPLE 13

The sunflower cake hydrolysate in atomised form, produced as described in Example 10 and and identified in Table II as stream 30, was used to prepare an acid drink of pleasant orange taste for use as a slimming diet.

The formulation was prepared in the following manner.

21 grams of sugar syrup of 720 Brix, 0.5 grams of saccharin and 0.7 grams of powdered orange flavour

type 102.055 of Du-Crocq Italiana S.R.L. were added to 660 ml of drinking water under stirring.

50 grams of sunflower cake hydrolysates were added to the colourless cloudy solution obtained.

In this manner a formulation of pH 4.3 and yellow-orange colour (deriving from the natural colour of the hydrolysates in solution) was prepared having a pleasant fresh taste of orange drink. The formulation (730 grams) has the following nutritional characteristics:

| | |
|---|---|
| Calories | 180 |
| Proteins | 30 grams |
| Carbohydrates | 15 grams |
| Fats | 0 grams |

This formulation based on sunflower cake hydrolysate represents an ideal meal for persons with a weight problem.

In this respect it is characterised by a high protein content representing about one half the daily protein requirement of an adult, and a low calorie content as a result of the absence of fats and the limited presence of saccharose, made possible by the bulk-agent action of the hydrolysate.

TABLE II

Process block diagram and data of Example 10

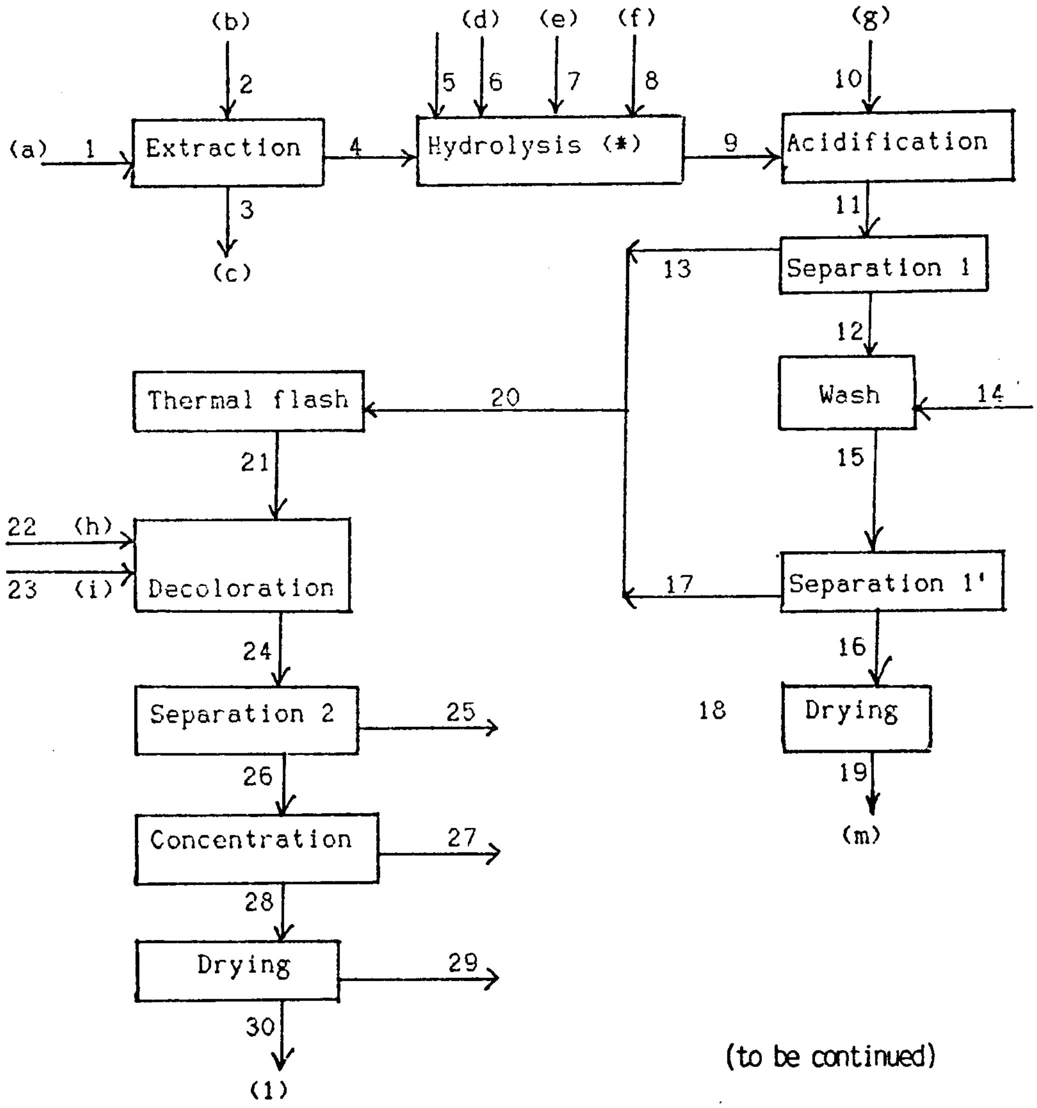


(to be continued)

NB: (*) protracted for 90 minutes; (a) sunflower cake; (b) dilute HCl solution; (c) liquid effluent; (d) sodium hydroxide solution; (e) crude papain enzyme; (f) $Na_2S_2O_5$; (g) citric acid; h) celite; (i) activated carbon; (l) protein hydrolysate; (m) animal feed coproduct.

TABLE II (continued)

STREAM COMPOSITIONS

| Stream | 1 | 2 | 3 | 4 | 5 | 6 | 7 | 8 | 9 | 10 |
|---|---|---|---|---|---|---|---|---|---|---|
| Dry substance | 90,00 | - | 22,00 | 68,00 | - | 1,16 | 0,72 | 0,24 | 70,12 | 4,32 |
| Water | 10.00 | 1500.00 | 1315.20 | 194.80 | 214.8 | 13.44 | - | - | 423.04 | - |
| TOTAL | 100.00 | 1500.00 | 1337.20 | 262.80 | 214.8 | 14.60 | 0.72 | 0.24 | 493.16 | 4.32 |

| Stream | 11 | 12 | 13 | 14 | 15 | 16 | 17 | 18 | 19 | 20 |
|---|---|---|---|---|---|---|---|---|---|---|
| Dry substance | 74,44 | 63,99 | 10,45 | - | 63,99 | 56,43 | 7,56 | - | 56,43 | 18,01 |
| Water | 423.04 | 240.01 | 183.03 | 176.0 | 416.01 | 221.57 | 194.44 | 218.27 | 3.3 | 377.47 |
| TOTAL | 497.48 | 304.00 | 193.48 | 176.0 | 480.00 | 278.00 | 202.00 | 218.27 | 59.73 | 395.48 |

| Stream | 21 | 22 | 23 | 24 | 25 | 26 | 27 | 28 | 29 | 30 |
|---|---|---|---|---|---|---|---|---|---|---|
| Dry substance | 18,01 | 4,20 | 1,26 | 23,47 | 8,52 | 14,95 | - | 14,95 | - | 14,95 |
| Water | 377.47 | - | - | 377.47 | 25.56 | 351.91 | 329.49 | 22.42 | 21.57 | 0.85 |
| TOTAL | 395,48 | 4,20 | 1,26 | 400,94 | 34,08 | 366,86 | 329,49 | 37,77 | 21,57 | 15,80 |

(to be continued)

TABLE II (continued)

PROCESS CONDITIONS

| Stream | 1 | 2 | 3 | 4 | 5 | 6 | 7 | 8 | 9 | 10 |
|---|---|---|---|---|---|---|---|---|---|---|
| pH | - | 1,6 | 4,5 | 4,5 | 6,6 | 14,0 | - | - | 6,5 | - |
| Temperature (°C) | - | 20 | 20 | 20 | 20 | 20 | - | - | 50 | - |

| Stream | 11 | 12 | 13 | 14 | 15 | 16 | 17 | 18 | 19 | 20 |
|---|---|---|---|---|---|---|---|---|---|---|
| pH | 4,3 | - | 4,3 | 6,6 | 4,3 | 4,3 | 4,3 | - | - | 4,3 |
| Temperature (°C) | 35 | - | 20 | 20 | 20 | 20 | 20 | >100 | - | 20 |

| Stream | 21 | 22 | 23 | 24 | 25 | 26 | 27 | 28 | 29 | 30 |
|---|---|---|---|---|---|---|---|---|---|---|
| pH | 4,3 | - | - | 4,3 | - | 4,3 | - | - | - | - |
| Temperature (°C) | 95 | - | - | 50 | - | 20 | >100 | 60 | >100 | - |

(to be continued)

TABLE II (continued and concluded)

ANALYSIS ON DRY BASIS

| Stream | 1 | 2 | 3 | 4 | 5 | 6 | 7 | 8 | 9 | 10 |
|---|---|---|---|---|---|---|---|---|---|---|
| Crude proteins | 27,00 | - | 3,12 | 23,88 | - | - | 0,72 | - | 24,60 | - |
| Ash | 6,40 | - | 4,40 | 2,00 | - | 0,87 | - | - | 2,87 | - |
| Carbohydrates (**) | 8,00 | - | 7,60 | 0,40 | - | - | - | - | 0,40 | - |
| Citric acid | - | - | - | - | - | - | - | - | - | 4,32 |
| Others (***) | 48,60 | - | 6,88 | 41,72 | - | 0,29 | - | 0,24 | 42,25 | - |
| TOTAL | 90,00 | - | 22,00 | 68,00 | - | 1,16 | 0,72 | 0,24 | 70,12 | 4,32 |

| Stream | 11 | 12 | 13 | 14 | 15 | 16 | 17 | 18 | 19 | 20 |
|---|---|---|---|---|---|---|---|---|---|---|
| Crude proteins | 24,6 | 17,83 | 6,77 | - | 17,83 | 12,72 | 5,11 | - | 12,72 | 11,88 |
| Ash | 2,87 | 2,1 | 0,77 | - | 2,1 | 1,70 | 0,40 | - | 1,70 | 1,17 |
| Carbohydrates (**) | 0,40 | 0,1 | 0,3 | - | 0,1 | 0,1 | - | - | 0,1 | 0,3 |
| Citric acid | 4,32 | 2,32 | 2,0 | - | 2,32 | 1,18 | 1,14 | - | 1,18 | 3,14 |
| Others (***) | 42,25 | 41,64 | 0,61 | - | 41,64 | 40,73 | 0,91 | - | 40,73 | 1,52 |
| TOTAL | 74,44 | 63,99 | 10,45 | - | 63,99 | 56,43 | 7,56 | - | 56,43 | 18,01 |

| Stream | 21 | 22 | 23 | 24 | 25 | 26 | 27 | 28 | 29 | 30 |
|---|---|---|---|---|---|---|---|---|---|---|
| Crude proteins | 11,88 | - | - | 11,88 | 2,18 | 9,7 | - | 9,7 | - | 9,7 |
| Ash | 1,17 | - | - | 1,17 | 0,31 | 0,86 | - | 0,86 | - | 0,86 |
| Carbohydrates (**) | 0,8 | - | - | 0,30 | - | 0,30 | - | 0,30 | - | 0,30 |
| Citric acid | 3,14 | - | - | 3,14 | 0,2 | 2,94 | - | 2,94 | - | 2,94 |
| Others (***) | 1,52 | 4,2 | 1,26 | 6,98 | 5,83 | 1,15 | - | 1,15 | - | 1,15 |
| TOTAL | 18,01 | 4,2 | 1,26 | 23,47 | 8,52 | 14,95 | - | 14,95 | - | 14,95 |

NB: (**) comprises saccharides and low molecular weight oligosaccharides; (***) comprises cellulose, hemicellulose, lignin, lipids, all chemicals used except citric acid, and the water theoretically generated by the reaction: 2NaOH --> $Na_2O + H_2O$ which takes place during ash determination.

## Claims

### Claims for the following Contracting States : AT, BE, CH, DE, FR, GB, LI, LU, NL, SE

1. Method for preparing a predominantly polypeptidic hydrolysate by enzymatic hydrolysis of a protein-containing substrate, at a pH of from 6,0 to 9,0 and subsequent acidification, characterized in that the acidification step is carried out by admixing the liquor obtained in the enzymatic hydrolysis step with an ion-exchange resin having a high proton-yielding capacity, or, alternatively, by either concurrently, or

subsequently, adding three nutritionally acceptable acids selected from sulphuric acid, hydrochloric acid, phosphoric acid, and the organic acids having a $pK_a$ of from 3,0 to 4,0.

**2.** Method according to Claim 1, wherein the ion-exchange resin is a resin having sulphonic acid functionality.

**3.** Method according to Claim 2, wherein the mean diameter of the resin particles is greater than 0,4 mm.

**4.** Method according to Claim 1, wherein the ion-exchange resin is a gel resin

**5.** Method according to Claim 1, wherein the ion-exchange resin is used in an amount of from 0,3 g to 1,5 g, on a dry weight basis, per each gram of protein which is present in the liquor obtained in the enzymatic hydrolysis step.

**6.** Method according to Claim 1, wherein the nutritionally acceptable organic acid having a $pK_a$ of from 3,0 to 4,0 is selected from citric acid, lactic acid, tartaric acid and malic acid.

**7.** Method according to Claim 1, wherein the protein-containing substrate is a vegetable material and the acidification step is carried out by initially reducing the pH from the optimum hydrolysis pH value to a pH value of 5 by adding a nutritionally acceptable organic acid, then from a value of 5 to a value of 4,6 by adding phosphoric acid, and finally from 4,6 to the pH value which is required for the minimum solubility of the unreacted proteins contained in the substrate.

**8.** Method according to Claim 1, wherein the protein-containing substrate is an animal material and the acidification step is carried out by initially reducing the pH from the optimum hydrolysis pH value to a pH value of 5,2 by adding a nutritionally acceptable organic acid, then from a value of 5,2 to a value of 4,9 by adding phosphoric acid, and finally from 4,9 to the pH value which is required for the minimum solubility of the unreacted proteins contained in the substrate.

**9.** Method according to Claim 7, wherein the protein-containing substrate is deoiled soybean meal.

**10.** Method according to Claim 7, wherein the protein-containing substrate is sunflower cake.

**11.** Method according to claim 1 wherein the protein-containing substrate is sunflower cake which has been ground to a particle size of from 2,0 mm and 0,001 mm, and from which nutritionally unacceptable soluble components have been extracted, and wherein the acidifying step takes place at a pH of from 3,5 to 5,0, followed by separating the insoluble fraction and recovering the protein hydrolysate

**12.** A predominantly polypeptidic protein hydrolysate prepared according to the process of Claim 1, having a hydrochloric acid or a sulphuric acid content (w/w) lower than 1,7%, or a sulphuric acid content (w/w) lower than 2,1%, a phosphate content (w/w) lower than 6,3% relative to the weight of the dry hydrolysate, an an organic acid content (w/w) lower than 13% relative to the weight of the dry hydrolysate.

**13.** Use of the predominantly polypeptidic hydrolysate prepared with the process according to Claim 1, in human nutrition, dietetics and dieto-therapeutics.

**14.** Use of the predominantly polypeptidic hydrolysate prepared with the process according to Claim 11, in human nutrition, dietetics and dieto-therapeutics.

**Claims for the following Contracting States : ES, GR**

**1.** Method for preparing a predominantly polypeptidic hydrolysate by enzymatic hydrolysis of a protein-containing substrate, at a pH of from 6,0 to 9,0 and subsequent acidification, characterized in that the acidification step is carried out by admixing the liquor obtained in the enzymatic hydrolysis step with an ion-exchange resin having a high proton-yielding capacity, or, alternatively, by either concurrently, or subsequently, adding three nutritionally acceptable acids selected from sulphuric acid, hydrochloric acid, phosphoric acid, and the organic acids having a $pK_a$ of from 3,0 to 4,0.

2. Method according to Claim 1, characterized in that the ion-exchange resin is a resin having sulphonic acid functionality.

3. Method according to Claim 2, characterized in that the mean diameter of the resin particles is greater than 0,4 mm.

4. Method according to Claim 1, characterized in that the ion-exchange resin is a gel resin

5. Method according to Claim 1, characterized in that the ion-exchange resin is used in an amount of from 0,3 g to 1,5 g, on a dry weight basis, per each gram of protein which is present in the liquor obtained in the enzymatic hydrolysis step.

6. Method according to Claim 1, characterized in that the nutritionally acceptable organic acid having a $pK_a$ of from 3,0 to 4,0 is selected from citric acid, lactic acid, tartaric acid and malic acid.

7. Method according to Claim 1, characterized in that the protein-containing substrate is a vegetable material and the acidification step is carried out by initially reducing the pH from the optimum hydrolysis pH value to a pH value of 5 by adding a nutritionally acceptable organic acid, then from a value of 5 to a value of 4,6 by adding phosphoric acid, and finally from 4,6 to the pH value which is required for the minimum solubility of the unreacted proteins contained in the substrate.

8. Method according to Claim 1, characterized in that the protein-containing substrate is an animal material and the acidification step is carried out by initially reducing the pH from the optimum hydrolysis pH value to a pH value of 5,2 by adding a nutritionally acceptable organic acid, then from a value of 5,2 to a value of 4,9 by adding phosphoric acid, and finally from 4,9 to the pH value which is required for the minimum solubility of the unreacted proteins contained in the substrate.

9. Method according to Claim 7, characterized in that the protein-containing substrate is deoiled soybean mean.

10. Method according to Claim 7, characterized in that the protein-containing substrate is sunflower cake.

11. Method for preparing a predominantly polypeptidic hydrolysate from sunflower cake which has been ground to a particle size of from 2,0 mm and 0,001 mm, comprising the steps of extracting the nutritionally unacceptable soluble components, subjecting the resultant material to enzymatic hydrolysis with a proteolytic enzyme, acidifying the liquor obtained to a pH of from 3,5 to 5,0, separating the insoluble fraction and recovering the protein hydrolysate

**Patentansprüche**

**Patentansprüche für folgende Vertragsstaaten : AT, BE, CH, DE, FR, GB, LI, LU, NL, SE**

1. Verfahren zur Herstellung eines überwiegend polypeptidischen Hydrolysats durch enzymatische Hydrolyse eines proteinhältigen Substrats bei einem pH-Wert von 6.0 bis 9,0 und anschlienßende Ansäuerung, dadurch gekennzeichnet, daß die Ansäuerungsstufe durch Vermischen der in der enzymatischen Hydrolysestufe erhaltenen Flüssigkeit mit einem Ionenaustauschharz, das eine hohe Protonen-liefernde Kapazität aufweist, oder in alternativer Weise durch entweder gleichzeitige oder anschließende Zugabe von drei ernährungsmäßig annehmbaren Säuren, ausgewählt unter Schwefelsäure, Chlorwasserstoffsäure, Phosphorsäure und den organischen Säuren mit einem pKa-Wert von 3,0 bis 4,0, ausgeführt wird.

2. Verfahren nach Anspruch 1, worin das Ionenaustauschharz ein Harz mit Sulfonsäurefunktionalität ist.

3. Verfahren nach Anspruch 2, worin der mittlere Durchmesser der Harzteilchen größer als 0,4 mm ist.

4. Verfahren nach Anspruch 1, worin das Ionenaustauschharz ein Gel-Harz ist.

5. Verfahren nach Anspruch 1, worin das Ionenaustauschharz in einer Menge von 0,3 bis 1,5 g, auf Trockengewichtsbasis bezogen, je Gramm Protein verwendet wird, das in der in der enzymatischen

Hydrolysestufe erhaltenen Flüssigkeit vorliegt.

6. Verfahren nach Anspruch 1, worin die ernährungsmäßig annehmbare organische Säure mit einem pKa-Wert von 3,0 bis 4,0 unter Zitronensäure, Milchsäure, Weinsäure und Apfelsäure ausgewählt wird.

7. Verfahren nach Anspruch 1, worin das proteinhältige Substrat ein Pflanzenmaterial ist und die Ansäuerungsstufe dadurch ausgeführt wird, daß zunächst der pH-Wert vom optimalen Hydrolyse-pH-Wert durch Zugabe einer ernähungsmäßig annehmbaren organischen Säure auf pH 5 abgesenkt wird, dann von einem pH-Wert 5 durch Zusetzen von Phosphorsäure auf pH 4,6 abgesenkt wird, und schließlich von 4,6 auf jenen pH-Wert abgesenkt wird, der für die Mindestlöslichkeit der im Substrat enthaltenen nicht-ungesetzten Proteine erforderlich ist.

8. Verfahren nach Anspruch 1, worin das proteinhältige Substrat ein tierisches Material ist und die Ansäuerungsstufe dadurch ausgeführt wird, daß zunächst der pH-Wert vom optimalen Hydrolyse-pH-Wert durch Zugabe einer ernährungsmäßig annehmbaren organischen Säure auf pH 5,2 abgesenkt wird, dann von pH 5,2 durch Zugabe von Phosphorsäure auf 4,9 abgesenkt wird, und schließlich von 4,9 auf jenen pH-Wert abgesenkt wird, der für die Mindestlöslichkeit der im Substrat enthaltenen nichtumgesetzten Proteine erforderlich ist.

9. Verfahren nach Anspruch 7, worin das proteinhältige Substrat entöltes Sojabohnenmehl ist.

10. Verfahren nach Anspruch 7, worin das proteinhältige Substrat Sonnenblumenkuchen ist.

11. Verfahren nach Anspruch 1, worin das proteinhältige Substrat Sonnenblumenkuchen ist, der zu einer Teilchengröße von 2,0 mm bis 0,001 mm gemahlen worden ist und aus dem ernährungsmäßig unannehmbare lösliche Komponenten extrahiert worden sind, und worin die Ansäuerungsstufe bei einem pH-Wert von 3,5 bis 5,0 stattfindet, gefolgt von einem Abtrennen der unlöslichen Fraktion und einem Gewinnen des Proteienhydrolysats.

12. Überwiegend polypeptidisches Proteinhydrolysat, hergestellt nach dem Verfahren von Beispiel 1, mit einem Chlorwasserstoffsäure- oder einem Schwefelsäuregehalt von weniger als 1,7 % (Gewicht/Gewicht) oder einem Schwefelsäuregehalt von weniger als 2,1 % (Gewicht/Gewicht), einem Phosphatgehalt von weniger als 6,3 % (Gewicht/Gewicht), bezogen auf das Gewicht des trockenen Hydrolysats, und einem Gehalt an organischer Säure von weniger als 13 % (Gewicht/Gewicht), bezogen auf das Gewicht des trockenen Hydrolysats.

13. Verwendung des überwiegend polypeptidischen Hydrolysats, hergestellt mit dem Verfahren nach Anspruch 1, in der Humanernährung -Diätetik und -Diäto-Therapeutik.

14. Verwendung des überwiegend polypeptidischen Hydrolysats, hergestellt mit dem Verfahren nach Anspruch 11, in der Humanernährung, -Diätetik und -Diäto-Therapeutik.

**Patentansprüche für folgende Vertragsstaaten : ES, GR**

1. Verfahren zur Herstellung eines überwiegend polypeptidischen Hydrolysats durch enzymatische Hydrolyse eines proteinhältigen Substrats bei einem pH-Wert von 6.0 bis 9,0 und anschließende Ansäuerung, dadurch gekennzeichnet, daß die Ansäuerungsstufe durch Vermischen der in der enzymatischen Hydrolysestufe erhaltenen Flüssigkeit mit einem Ionenaustauschharz, das eine hohe Protonen-liefernde Kapazität aufweist, oder in alternativer Weise durch entweder gleichzeitige oder anschließende Zugabe von drei ernährungsmäßig annehmbaren Säuren, ausgewählt unter Schwefelsäure, Chlorwasserstoffsäure, Phosphorsäure und den organischen Säuren mit einem pKa-Wert von 3,0 bis 4,0, ausgeführt wird.

2. Verfahren nach Anspruch 1, worin das Ionenaustauschharz ein Harz mit Sulfonsäurefunktionalität ist.

3. Verfahren nach Anspruch 2, worin der mittlere Durchmesser der Harzteilchen größer als 0,4 mm ist.

4. Verfahren nach Anspruch 1, worin das Ionenaustauschharz ein Gel-Harz ist.

5. Verfahren nach Anspruch 1, worin das Ionenaustauschharz in einer Menge von 0,3 bis 1,5 g, auf Trockengewichtsbasis bezogen, je Gramm Protein verwendet wird, das in der in der enzymatischen Hydrolysestufe erhaltenen Flüssigkeit vorliegt.

6. Verfahren nach Anspruch 1, worin die ernährungsmäßig annehmbare organische Säure mit einem pKa-Wert von 3,0 bis 4,0 unter Zitronensäure, Milchsäure, Weinsäure und Apfelsäure ausgewählt wird.

7. Verfahren nach Anspruch 1, worin das proteinhältige Substrat ein Pflanzenmaterial ist und die Ansäuerungsstufe dadurch ausgeführt wird, daß zunächst der pH-Wert vom optimalen Hydrolyse-pH-Wert durch Zugabe einer ernähungsmäßig annehmbaren organischen Säure auf pH 5 abgesenkt wird, dann von einem pH-Wert 5 durch Zusetzen von Phosphorsäure auf pH 4,6 abgesenkt wird, und schließlich von 4,6 auf jenen pH-Wert abgesenkt wird, der für die Mindestlöslichkeit der im Substrat enthaltenen nicht-umgesetzten Proteine erforderlich ist.

8. Verfahren nach Anspruch 1, worin das proteinhältige Substrat ein tierisches Material ist und die Ansäuerungsstufe dadurch ausgeführt wird, daß zunächst der pH-Wert vom optimalen Hydrolyse-pH-Wert durch Zugabe einer ernährungsmäßig annehmbaren organischen Säure auf pH 5,2 abgesenkt wird, dann von pH 5,2 durch Zugabe von Phosphorsäure auf 4,9 abgesenkt wird, und schließlich von 4,9 auf jenen pH-Wert abgesenkt wird, der für die Mindestlöslichkeit der im Substrat enthaltenen nichtumgesetzten Proteine erforderlich ist.

9. Verfahren nach Anspruch 7, worin das proteinhältige Substrat entöltes Sojabohnenmehl ist.

10. Verfahren nach Anspruch 7, worin das proteinhältige Substrat Sonnenblumenkuchen ist.

11. Verfahren zur Herstellung eines überwiegend polypeptidischen Hydrolysats aus Sonnenblumenkuchen, der auf eine Teilchengröße von 2,0 mm bis 0,001 mm gemahlen worden ist, umfassend die Stufen eines Extrahierens von ernährungsmäßig unannehmbaren löslichen Komponenten, einer Ausführung einer enzymatischen Hydrolyse sn dem gebildeten Material mit einem proteolytischen Enzym, eines Ansäuerns der erhaltenen Flüssigkeit auf einen pH-Wert von 3,5 bis 5,0, eines Abtrennens der unlöslichen Fraktion und eines Gewinnens des Proteinhydrolysats.

**Revendications**
**Revendications pour les Etats contractants suivants : AT, BE, CH, DE, FR, GB, LI, LU, NL, SE**

1. Procédé de préparation d'un hydrolysat contenant principalement des polypeptides, par hydrolyse enzymatique, à un pH de 6,0 à 9,0, d'un substrat contenant des protéines et acidification ultérieure, **caractérisé** en ce que l'on réalise l'étape d'acidification en mélangeant la liqueur obtenue dans l'étape d'hydrolyse enzymatique avec une résine échangeuse d'ions ayant une capacité élevée de fourniture de protons ou, selon une variante, en ajoutant simultanément ou successivement trois acides acceptables en nutrition, choisis parmi l'acide sulfurique, l'acide chlorhydrique, l'acide phosphorique et les acides organiques ayant un $pK_a$ de 3,0 à 4,0.

2. Procédé selon la revendication 1, dans lequel la résine échangeuse d'ions est une résine ayant des groupes fonctionnels acide sulfonique.

3. Procédé selon la revendication 2, dans lequel le diamètre moyen des particules de résine est supérieur à 0,4 mm.

4. Procédé selon la revendication 1, dans lequel la résine échangeuse d'ions est une résine sous forme de gel.

5. Procédé selon la revendication 1, dans lequel on utilise la résine échangeuse d'ions en une quantité de 0,3 g à 1,5 g, exprimée en poids de produit sec, par gramme de protéine qui est présente dans la liqueur obtenue dans l'étape d'hydrolyse enzymatique.

6. Procédé selon la revendication 1, dans lequel l'acide organique acceptable en nutrition, ayant un $pK_a$ de 3,0 à 4,0, est choisi parmi l'acide citrique, l'acide lactique, l'acide tartrique et l'acide malique.

**7.** Procédé selon la revendication 1, dans lequel le substrat contenant des protéines est une matière végétale et on réalise l'étape d'acidification en abaissant d'abord le pH depuis la valeur de pH optimale pour l'hydrolyse jusqu'à une valeur de pH de 5 par addition d'un acide organique acceptable en nutrition, puis en abaissant le pH d'une valeur de 5 à une valeur de 4,6 par addition d'acide phosphorique et enfin en abaissant le pH de 4,6 à la valeur de pH nécessaire pour l'obtention de la solubilité minimale des protéines qui n'ont pas réagi, présentes dans le substrat.

**8.** Procédé selon la revendication 1, dans lequel le substrat contenant des protéines est une matière animale et on réalise l'étape d'acidification en abaissant d'abord le pH depuis la valeur de pH optimale pour l'hydrolyse jusqu'à une valeur de pH de 5,2 par addition d'un acide organique acceptable en nutrition, puis en abaissant le pH d'une valeur de 5,2 à une valeur de 4,9 par addition d'acide phosphorique et enfin en abaissant le pH de 4,9 à la valeur de pH nécessaire pour l'obtention de la solubilité minimale des protéines qui n'ont pas réagi, présentes dans le substrat.

**9.** Procédé selon la revendication 7, dans lequel le substrat contenant des protéines est de la farine de soja déshuilée.

**10.** Procédé selon la revendication 7, dans lequel le substrat contenant des protéines est du gâteau de tournesol.

**11.** Procédé selon la revendication 1, dans lequel le substrat contenant des protéines est du gâteau de tournesol qui a été broyé jusqu'à obtention d'une taille de particule de 2,0 mm à 0,001 mm et dont on a extrait les constituants solubles inacceptables en nutrition, et dans lequel l'étape d'acidification a lieu à un pH de 3,5 à 5,0 et est suivie de la séparation de la fraction insoluble et de la récupération de l'hydrolysat de protéine.

**12.** Hydrolysat de protéine contenant principalement des polypeptides, préparé selon le procédé de la revendication 1, ayant une teneur en acide chlorhydrique ou en acide sulfurique inférieure à 1,7 % (p/p), ou une teneur en acide sulfurique inférieure à 2,1 % (p/p), une teneur en phosphate inférieure à 6,3 % (p/p), par rapport au poids de l'hydrolysat sec, et une teneur en acide organique inférieure à 13 % (p/p), par rapport au poids de l'hydrolysat sec.

**13.** Utilisation de l'hydrolysat contenant principalement des polypeptides, préparé par le procédé selon la revendication 1, en nutrition, diététique et thérapeutique diététique humaines.

**14.** Utilisation de l'hydrolysat contenant principalement des polypeptides, préparé par le procédé selon la revendication 11, en nutrition, diététique et thérapeutique diététique humaines.

**Revendications pour les Etats contractants suivants : ES, GR**

**1.** Procédé de préparation d'un hydrolysat contenant principalement des polypeptides, par hydrolyse enzymatique, à un pH de 6,0 à 9,0, d'un substrat contenant des protéines et acidification ultérieure, **caractérisé** en ce que l'on réalise l'étape d'acidification en mélangeant la liqueur obtenue dans l'étape d'hydrolyse enzymatique avec une résine échangeuse d'ions ayant une capacité élevée de fourniture de protons ou, selon une variante, en ajoutant simultanément ou successivement trois acides acceptables en nutrition, choisis parmi l'acide sulfurique, l'acide chlorhydrique, l'acide phosphorique et les acides organiques ayant un $pK_a$ de 3,0 à 4,0.

**2.** Procédé selon la revendication 1, **caractérisé** en ce que la résine échangeuse d'ions est une résine ayant des groupes fonctionnels acide sulfonique.

**3.** Procédé selon la revendication 2, **caractérisé** en ce que le diamètre moyen des particules de résine est supérieur à 0,4 mm.

**4.** Procédé selon la revendication 1, **caractérisé** en ce que la résine échangeuse d'ions est une résine sous forme de gel.

**5.** Procédé selon la revendication 1, **caractérisé** en ce que l'on utilise la résine échangeuse d'ions en

une quantité de 0,3 g à 1,5 g, exprimée en poids de matière sèche, par gramme de protéine qui est présente dans la liqueur obtenue dans l'étape d'hydrolyse enzymatique.

**6.** Procédé selon la revendication 1, **caractérisé** en ce que l'acide organique acceptable en nutrition, ayant un $pK_a$ de 3,0 à 4,0, est choisi parmi l'acide citrique, l'acide lactique, l'acide tartrique et l'acide malique.

**7.** Procédé selon la revendication 1, **caractérisé** en ce que le substrat contenant des protéines est une matière végétale et en ce que l'on effectue l'étape d'acidification en abaissant d'abord le pH depuis la valeur de pH optimale pour l'hydrolyse jusqu'à une valeur de pH de 5 par addition d'un acide organique acceptable en nutrition, puis en abaissant le pH d'une valeur de 5 à une valeur de 4,6 par addition d'acide phosphorique et enfin en abaissant le pH de 4,6 à la valeur de pH nécessaire pour l'obtention de la solubilité minimale des protéines qui n'ont pas réagi, présentes dans le substrat.

**8.** Procédé selon la revendication 1, **caractérisé** en ce que le substrat contenant des protéines est une matière animale et en ce que l'on effectue l'étape d'acidification en abaissant d'abord le pH depuis la valeur de pH optimale pour l'hydrolyse jusqu'à une valeur de pH de 5,2 par addition d'un acide organique acceptable en nutrition, puis en abaissant le pH d'une valeur de 5,2 à une valeur de 4,9 par addition d'acide phosphorique et enfin en abaissant le pH de 4,9 à la valeur de pH qui est nécessaire pour l'obtention de la solubilité minimale des protéines qui n'ont pas réagi, présentes dans le substrat.

**9.** Procédé selon la revendication 7, **caractérisé** en ce que le substrat contenant des protéines est de la farine de soja déshuilée.

**10.** Procédé selon la revendication 7, **caractérisé** en ce que le substrat contenant des protéines est du gâteau de tournesol.

**11.** Procédé pour préparer un hydrolysat contenant principalement des polypeptides à partir d'un gâteau de tournesol qui a été broyé jusqu'à obtention d'une taille de particule de 2,0 mm à 0,001 mm, comprenant les étapes consistant à extraire les constituants solubles inacceptables en nutrition, soumettre le produit résultant à une hydrolyse enzymatique réalisée au moyen d'une enzyme protéolytique, acidifier la liqueur obtenue de façon a amener son pH à une valeur de 3,5 à 5,0, séparer la fraction insoluble et récupérer l'hydrolysat de protéine.